(19) Europäisches Patentamt
European Patent Office
Office européen des brevets

(11) **EP 1 940 948 B2**

(12) **NEW EUROPEAN PATENT SPECIFICATION**
After opposition procedure

(45) Date of publication and mention
of the opposition decision:
**16.01.2019 Bulletin 2019/03**

(45) Mention of the grant of the patent:
**10.02.2010 Bulletin 2010/06**

(21) Application number: **06811261.4**

(22) Date of filing: **28.09.2006**

(51) Int Cl.:
**C08L 33/02** *(2006.01)* **C08K 3/36** *(2006.01)*
**C08K 5/00** *(2006.01)*

(86) International application number:
**PCT/JP2006/319923**

(87) International publication number:
**WO 2007/037522 (05.04.2007 Gazette 2007/14)**

(54) **WATER-ABSORBENT AGENT COMPOSITION AND METHOD FOR MANUFACTURING SAME**

WASSERABSORPTIONSMITTELZUSAMMENSETZUNG UND HERSTELLUNGSVERFAHREN DAFÜR

COMPOSITION D'AGENT HYDROABSORBANT ET SON PROCÉDÉ DE FABRICATION

(84) Designated Contracting States:
**BE DE**

(30) Priority: **30.09.2005 JP 2005289396**

(43) Date of publication of application:
**09.07.2008 Bulletin 2008/28**

(73) Proprietor: **Nippon Shokubai Co., Ltd.**
**Osaka-shi, Osaka 541-0043 (JP)**

(72) Inventors:
• **KIMURA, Kazuki**
**Hyogo 668-0256 (JP)**
• **IKEUCHI, Hiroyuki**
**Hyogo 670-0887 (JP)**

(74) Representative: **TBK**
**Bavariaring 4-6**
**80336 München (DE)**

(56) References cited:
**EP-A- 1 325 777      EP-A1- 1 512 712**
**WO-A1-01/25290      WO-A2-2004/069915**
**JP-A- H0 616 822      JP-A- 04 120 176**
**JP-A- 07 173 296      JP-A- 09 241 322**
**JP-A- 10 204 184      JP-A- 11 286 611**
**JP-A- 2001 137 704      JP-A- 2005 186 016**
**US-A- 5 980 879**

EP 1 940 948 B2

**Description**

TECHNICAL FIELD

The present invention relates to a method for producing a water-absorbent agent composition containing a polycarboxylic acid water-absorbent agent as a main component. More specifically, the present invention relates to a method for producing a water-absorbent agent composition superior in liquid permeability and liquid updrawing property.

BACKGROUND ART

Conventionally, a water-absorbent agent composition is widely used as a main construction material of sanitary materials (absorbent articles) such as disposable diapers, sanitary napkins, incontinence pads and the like, in order to absorb body fluids (e.g. urine, blood, and the like).

Well-known examples of the water-absorbent agent composition are (i) crosslinked partially neutralized polyacrylic acid; (ii) a hydrolyzed starch-acrylonitrile graft polymer; (iii) a neutralized starch-acrylic graft polymer; (iv) a saponified vinyl acetate-acrylic ester copolymer; (v) crosslinked carboxymethylcellulose; (vi) hydrolyzed acrylonitrile copolymer or hydrolyzed acrylamide copolymer, or crosslinked acrylonitrile copolymer or crosslinked acrylamide copolymer; (vii) a crosslinked polymer of a cationic monomer, (viii) a crosslinked isobutylene-maleic acid copolymer; (ix) a crosslinked polymer of 2-acrylamide-2-methylpropanesulfonic acid and acrylic acid; (x) and the like.

There has conventionally been needs for a water-absorbent agent composition having the following water-absorbent properties: (i) a high absorbency for a aqueous liquid such as a body fluid, (ii) an excellent absorption speed, (iii) excellent liquid permeability, and (iv) excellent gel strength of a swollen gel, and (v) an excellent updrawing property when water is absorbed from a base material containing a aqueous liquid, (vi) and the like.

Recently, the sanitary material such as the disposal diaper has higher performance and a thinner size. Along with this, an usage amount and usage ratio (mass %: a ratio within an absorptive article) of the water-absorbent agent composition tends to increase so as to achieve sufficient absorbency without causing leakage of liquid even in a thin absorptive article.

The sanitary material which includes a larger amount of the water-absorbent agent composition is preferable in terms of liquid storage itself. However, when a large amount of the water-absorbent agent composition is used, the water-absorbent resin becomes soft and gelatinous upon absorbing water. This causes a gel blocking phenomenon. As a result, a liquid absorbing property of the diaper significantly drops, which causes leakage of liquid.

In view of such a problem, the liquid permeability of the water-absorbent agent composition is attracting attention in recent years, and some water-absorbent agent compositions claiming higher liquid permeability have been published (eg. Documents 1 through 7). However, to make the conventional water-absorbent agent composition to express high liquid permeability, the gaps between the particles constituting the water-absorbent agent composition are generally increased by increasing the size of particles (the liquid permeability is proportional to the size of gap between the particles). Therefore, the gel gaps or the gaps between particles of general water-absorbent agent composition superior in liquid permeability are large. On the other hand, the liquid updrawing property is positively related to the capillary force between particles. It is known that a larger gap between particles means a smaller capillary force, that is, the liquid updrawing property is inversely related to the size of gap between the gels or the gap between the particles. According to this, an increase in liquid permeability by providing larger particle gaps causes a decrease in liquid updrawing property.

Moreover, it is another known fact that the particle size distribution is well-contributed to the liquid permeability. In view of this, some technologies for controlling the particle size of water-absorbent agent composition have been suggested (eg. Documents 8 through 11). These technologies however have a problem of decrease in liquid updrawing property when the particle size is increased. The liquid permeability is an important factor of the water-absorbent agent composition which has been attempted to be achieved in the many conventional technologies (eg. Documents 12 and 13). However, since the liquid permeability and the liquid updrawing property are incompatible in the water-absorbent agent composition, there has been a serious difficulty in ensuring both of them.

Document 14 and some other applications disclose techniques for overcoming this defect. The water-absorbent agent compositions according to these technologies are specifically controlled for its particle size distribution, and their surfaces contain quadrivalent polyol or polyol of a greater valency (eg. Document 14).

However, even in these conventional technologies, the liquid updrawing property of the water-absorbent agent composition still decreases depending on the conservation condition or due to process damage by the manufacturer when the water-absorbent agent is used as a material of an absorptive article such as paper diaper.

[Document 1]
PCT International Publication 26209/ 1995 (published on October 5, 1995)
[Document 2]

EP Patent No. 0951913 (published on October 27, 1999)
[Document 3]
EP Patent No. 0640330 (published on March 1, 1995)
[Document 4]
PCT International Publication 066056/2001 (published on September 13, 2001)
[Document 5]
PCT International Publication 47454/ 1998 (published on October 29, 1998)
[Document 6]
US Patent No. 6414214 (published on July 2, 2002)
[Document 7]
US Patent Publication No. 128618/2002 (published on September 12, 2002)
[Document 8]
US Patent No. 5051259 (published on September 24, 1991)
[Document 9]
EP Patent No. 0349240 (published on January 3, 1990)
[Document 10]
EP Patent No. 0579764 (published on January 26, 1994)
[Document 11]
EP Patent No. 0629411 (published on December 21, 1994)
[Document 12]
EP Patent No. 0532002 (published on March 17, 1993)
[Document 13]
US Patent No. 6399668 (published on March 17, 1993)
[Document 14]
Japanese Laid-Open Patent Application Tokukai 157758/2005 (published on June 16, 2005)

DISCLOSURE OF INVENTION

An object of the present invention is to provide a method for producing a water-absorbent agent composition which ensures superior liquid permeability and superior liquid updrawing property, which were conventionally incompatible with each other. Moreover, the water-abosrbent agent composition obtainable by the method according to the present invention causes less decrease in liquid updrawing property.

The inventors of the present invention intensively sought for a solution of the foregoing problems, and have found that a water-absorbent agent composition superior in liquid permeability and liquid updrawing property can be achieved by specifying a particle size and containing water-insoluble organic or inorganic fine particles into the composition. The inventors also found that such a water-absorbent agent composition can be easily manufactured by mixing a water-absorbent agent specified in particle size and liquid permeability in advance with slurry of water-insoluble organic or inorganic fine particles. The inventors thus completed the present invention.

In order to attain the foregoing object, a method for producing a water-absorbent agent composition according to the present invention comprises the step of:

(a) carrying outcrosslinking polymerization of an unsaturated monomer solution constituted of a monomer containing as a main component an acrylic acid and/or its salt in the presence of an internal crosslinking agent so as to produce a crosslinked polymer,

the method further comprising the steps of:

(b) drying the crosslinked polymer, adjusting the particle size of the crosslinked polymer, and carrying out another crosslinking with respect to a vicinity of the surface of each particle of the crosslinked polymer so as to obtain a water-absorbent agent which satisfies the following set of conditions (i) through (iv):

(i) mass average particle diameter (D50) is 200 to 500 $\mu$ m;
(ii) percentage of particles less than 150 $\mu$m in diameter is not more than 5 mass % with respect to the whole particle amount;
(iii) logarithm standard deviation ($\sigma\zeta$) of particle size distribution is 0.25 to 0.45;
(iv) saline flow conductivity (SFC) is not less than 30 (Unit: $10^{-7}$cm$^3 \times$s$\times$g$^{-1}$);

and

(c) mixing the water-absorbent agent with water-insoluble organic or inorganic fine particles 1 to 100nm in average particle diameter,

wherein:
the water-insoluble organic or inorganic fine particles are processed into a slurry 0.1 to 50 mass % in solid content to be mixed with the water-absorbent agent.

According to this method, the water-insoluble organic/inorganic particles are processed into a slurry 0.1 to 50 mass % in solid content to be mixed with the water-absorbent agent. By thus mixing the water-insoluble organic/inorganic particles in the form of slurry with the water-absorbent agent, the water-absorbent agent is mixed with water-insoluble organic/inorganic particles which are no longer significantly agglomerated, in other words, the water-soluble organic/inorganic particles to be mixed with the water-absorbent agent are close to individual primary particles. Since the water-insoluble organic/inorganic fine particles whose particle diameters are small are put in the water-absorbent agent, they hardly widen the gaps between the particles of the water-absorbent agent.

Further, by using hydrophilic water-insoluble organic/inorganic fine particles as the slurry (or in a dispersion state) of water-insoluble fine particles, it is possible to improve the hydrophilic property of the surface of the water-absorbent agent without deteriorating the capillary force of the water-absorbent agent. On this account, it is possible to further improve the liquid updrawing property of the water-absorbent agent.

Moreover, liquid, such as water, is added to the water-absorbent agent at the same time the water-insoluble organic/inorganic fine particles are added. On this account, polymer molecules of the water-absorbent agent are slightly swollen, and the water-insoluble organic/inorganic fine particles are put in the water-absorbent agent with the polymer network open.

Therefore, the water-insoluble organic/inorganic fine particles slightly enter into the water-absorbent agent from the surface thereof. Thus, the water-insoluble organic/inorganic fine particles hardly separate from the water-absorbent agent. Therefore, the liquid updrawing property of the water-absorbent agent composition hardly deteriorates even with environmental changes due to inappropriate storage or process damages at a manufacturer of sanitary materials (eg. diaper) using the water-absorbent agent as a material.

The foregoing water-absorbent agent contains a less amount of the component of particles of small-diameter, and its particle size is adjusted to ensure the foregoing superior liquid permeability and liquid updrawing property. Therefore, the water-absorbent agent composition manufactured by this water-absorbent agent is superior in liquid permeability. Therefore, the foregoing method produces water-absorbent agent composition which ensures the following effects: it is superior in both liquid permeability and liquid updrawing property, which were conventionally incompatible; and it causes less decrease in liquid updrawing property.

Additional objects, features, and strengths of the present invention will be made clear by the description below. Further, the advantages of the present invention will be evident from the following explanation in reference to the drawings.

BRIEF DESCRIPTION OF DRAWINGS

Figure 1 is a cross-sectional view showing a schematic structure of a device for measuring Saline. Flow Conductivity of a water-absorbent agent composition.

Figure 2 is a cross-sectional view showing schematic structure of a device for measuring capillary suction index.

Figure 3 is a perspective view showing a schematic structure of a device for measuring liquid updrawing speed.

Figure 4 is a lateral view showing as schematic structure of the measurement device for liquid updrawing speed.

Figure 5 is a lateral view showing a schematic structure of a container used in a LDV resistance test.

Figure 6(a) is a lateral view showing a vibration direction of the container in a LDV resistance test.

Figure 6(b) is an upper view showing a vibration direction of the container in a LDV resistance test.

Figure 7 is a lateral view showing a schematic structure of a disperser used in a LDV resistance test.

Figure 8 is a perspective view showing a track of the container in a LDV resistance test.

Figure 9 is a cross-sectional view showing a schematic structure of a device for measuring average gap radius index under no pressure.

REFERENCE NUMERALS

1. Porous glass plate
2. Glass filter
3. Conduit
4. Liquid Vessel

5.    Support ring
6.    Physiological saline
7.    Balance
8.    Stand
9.    Measurement sample
10.   Load
31.   Tank
32.   Glass tube
33.   Physiological saline
34.   L-shaped tube
35.   Cock
36.   Metal gauze
37.   Gel
38.   Stainless steel metal gauze
39.   Cell
40.   Vessel
41.   Vessel
41a.  Outer lid
41b.  Inner lid
42.   Disperser
43.   Upper clamp
44.   Lower clamp
45.   Glass filter
46.   Piston
48.   Vessel
49.   Even balance
51.   Trough sheet
52.   Trough grooves
53.   Screen
54.   Crossbar
55.   Experimental stand
56.   Liquid reserving tank
57.   Artificial urine
58.   Experimental jack
59.   Water-absorbent agent composition
60.   Clamp
61.   Filter funnel
62.   Glass filter
63.   Conduit
64.   Liquid tank
65.   Clamp
66.   Physiological saline
67.   Balance
68.   Automatic ascensor
68.   Measurement sample
70.   Computer

BEST MODE FOR CARRYING OUT THE INVENTION

One embodiment of the present invention is described below. The present invention is however not limited to the following embodiment, but may be altered by a skilled person within the subjective scope of the present invention.
Note that, in the following description, "weight" and "mass" are equivalent, and "wt%" and "mass%" are also equivalent. Further, the range "A to B" is more specifically a range not less than A but not more than B. The term "main component" indicates a content of 50 or greater mass %, more preferably not less than 70 mass % but not more than 100 mass %.
In an embodiment, the water-absorbent agent composition obtainable by the method of the present invention contains as a main component a polycarboxylic acid water-absorbent agent having a crosslinking structure which is produced by polymerizing an acid-group-containing unsaturated monomer. The water-absorbent agent composition also contains water-insoluble organic/inorganic fine particles, and satisfies either the following conditions (a) through (e), or another set of conditions (a') through (d').

(a) decreasing rate of a liquid distribution velocity (LDV) is not more than 30%
(b) saline flow conductivity (SFC) is not less than 60 (Unit: $10^{-7} \times cm^3 \times s \times g^{-1}$)
(c) mass average particle diameter (D50) is 200 to 420 $\mu m$
(d) logarithm standard deviation ($\sigma\zeta$) of particle size distribution is 0.25 to 0.40
(e) percentage of particles less than 150 $\mu m$ in diameter is not more than 3 mass % with respect to the whole particle amount
(a') content of particles 300 to 600 $\mu m$ in diameter is not less than 30 mass %
(b') average gap radius index under no pressure is less than 310 $\mu m$
(c') a liquid distribution velocity (LDV: measured before the LDV resistance test) is not less than 2.0mm/s
(d') saline flow conductivity (SFC) is not less than 30 (Unit: $10^{-7}cm^3 \times s \times g^{-1}$)

(1) Water-absorbent agent

A water-absorbent agent produced as an intermediate in the method according to the present embodiment is a crosslinked polymer which may form hydrogel and has a water-swelling property and water insolubility. The water-absorbent polymer having the water-swelling property is a water-absorbent polymer which, in ion-exchange water, absorbs water five times its own weight at minimum, preferably 50 times to 1,000 times its own weight. A water-insoluble crosslinked polymer designates a water-absorbent polymer containing a water-soluble component (water-soluble polymer) preferably at a ratio of 0 to 50 mass%, more preferably not more than 25 mass%, further preferably not more than 20 mass%, still further preferably not more than 15 mass%, and especially preferably not more than 10 mass%. The method of measuring the water soluble component will be specified later in "Example".

From the aspect of the liquid permeability and a liquid updrawing property, it is preferable that the foregoing water-absorbent agent be a water-absorbent agent having a crosslinked structure obtained by polymerizing an acid-group-containing unsaturated monomer, more preferably be a polycarboxylic acid water-absorbent agent (water-absorbent polymer) having a crosslinked structure.

The water-absorbent agent may be individual or a mixture of two or more kinds of: a partially neutralized polyacrylic acid polymer; hydrolysate of a starch-acrylonitrile graft polymer; a starch-acrylic acid graft polymer; a saponified vinyl acetate-acrylic ester copolymer; hydrolysate of an acrylonitrile copolymer; hydrolysate of an acrylamide copolymer; their cross-linked products; modified carboxyl group-containing cross-linked polyvinyl alcohol; and a crosslinked isobutylene-maleic anhydride copolymer. Among these, the partially neutralize polyacrylic acid polymer having the cross-linked structure obtained by polymerizing and cross-linking a monomer containing acrylic acid and/or its salt (neutralized product) as the main component is particularly preferable.

The range of the acid-group-containing unsaturated monomer includes a monomer which becomes an acid-group through hydrolysis after the polymerization, such as acrylonitrile. A acid-group-containing unsaturated monomer which contains the acid group at the time of polymerization is more preferable.

When a monomer contains acrylic acid and/or its salt is used as the main component, the other monomer may be used together. Examples of the monomer to be used with acrylic acid and/or its salt include water-soluble or hydrophobic unsaturated monomers, such as methacrylic acid; maleic acid (maleic anhydride); fumaric acid; crotonic acid; itaconic acid; vinyl sulfonic acid; 2-acrylamide-2-methylpropanesulfonic acid or 2-methacrylamide-2-methylpropanesulfonic acid; acryloxyalkanesulfonic acid or methacryloxyalkanesulfonic acid and its alkali metal salt or its ammonium salt; N-vinyl-2-pyrrolidone; N-vinylacetamide; acrylamide or methacrylamide; N-isopropyl acrylamide or N-isopropyl methacrylamide; N,N-dimethyl acrylamide or N,N-dimethyl methacrylamide; 2-hydroxyethyl acrylate or 2-hydroxyethyl methacrylate; methoxypolyethyleneglycol acrylate or methoxypolyethyleneglycol methacrylate; polyethylene glycol acrylate or polyethylene glycol methacrylate; isobutylene; lauryl acrylate or lauryl methacrylate; etc.

When using a monomer other than acrylic acid (salt), the amount of the monomer other than acrylic acid (salt) is preferably 0 mole% to 30 mole% with respect to the total amount of acrylic acid and/ or its salt used as the major component, and more preferably 0 mole% to 10 mole%. With this arrangement, it is possible to further improve the absorption property of the resulting water-absorbent agent (composition), and also possible to obtain the water-absorbent agent (composition) at lower cost.

The crosslinked structure is essential for the water-absorbent agent. An internal crosslinking agent may be used to form a crosslinked structure, or the water-absorbent agent may be a self cross-linking type which does not require an internal cross-linking agent. However, it is preferable that the water-absorbent agent be a water-absorbent agent obtained by copolymerizing or reacting an internal cross-linking agent (an internal cross-linking agent of the water-absorbent agent) having, in one molecule, two or more polymerizable unsaturated groups and two or more reactive groups.

Specific examples of the internal cross-linking agent include N,N'-methylenebis acrylamide or N,N'-methylenebis methacrylamide; ethyleneglycol diacrylate, polyethyleneglycol diacrylate, ethyleneglycol dimethacrylate or polyethyleneglycol dimethacrylate; propyleneglycol diacrylate, polypropyleneglycol diacrylate, propyleneglycol dimethacrylate, or polypropyleneglycol dimethacrylate; trimethylolpropane triacrylate or trimethylolpropane trimethacrylate; glycerin triacrylate or glycerin trimethacrylate; glycerin acrylate methacrylate; ethylene oxide modified trimethylolpropane triacrylate or ethylene oxide modified trimethylolpropane trimethacrylate; pentaerythritol hexaacrylate or pentaerythritol hexamethacrylate; triallyl cyanurate; triallyl isocyanurate; triallyl phosphate; triallyl amine; polyallyloxyalkane or polymethallyloxyalkane; ethyleneglycol diglycidyl ether or polyethyleneglycol diglycidyl ether; glycerol diglycidyl ether; ethylene glycol; polyethylene glycol; propylene glycol; glycerin; pentaerythritol; mesoerythritol; xylitol; sorbitol; ethylene diamine; ethylene carbonate; propylene carbonate; polyethyleneimine; and glycidyl acrylate or glycidyl methacrylate.

These internal cross-linking agents may be used alone or in combination of two or more kinds. The internal cross-linking agent may be added to a reaction system either at once or partially several times. In the case of using at least one kind of internal cross-linking agent or two or more kinds of internal cross-linking agents, it is preferable that a compound having two or more polymerizable unsaturated groups be required to be used at the time of polymerization in view of the absorption property, etc. of the resulting water-absorbent agent or water-absorbent .resin composition.

The amount of the internal cross-linking agent to be used is preferably in a range from 0.001 mole% to 2 mole% with respect to the amount of the monomer (excluding the cross-linking agent), more preferably from 0.005 mole% to 1 mole%, further preferably from 0.005 mole% to 0.5 mole%, still further preferably from 0.01 mole% to 0.5 mole%, yet further preferably from 0.01 mole% to 0.2 mole%, especially preferably from 0.03 mole% to 0.2 mole%, and most preferably from 0.03 to 0.15 mole%. When the amount of the internal cross-linking agent to be used is smaller than 0.001 mole%, and when the amount of the internal cross-linking agent to be used is larger than 2 mole%, it may not be possible to obtain a sufficient absorption property(s) (for example, the water-soluble component becomes too much, the water absorption ratio becomes low, etc.).

When introducing the crosslinked structure into a polymer by using the internal cross-linking agent, the introduction timing is not especially limited, and the internal cross-linking agent may be added to the reaction system before the polymerization of the monomer, during the polymerization, after the polymerization, or after the neutralization.

When polymerizing the monomer to obtain the water-absorbent agent used in the present invention, the bulk polymerization and the precipitation polymerization can be used. However, in view of the performance, ease of control of the polymerization, and the absorption property of the water-absorbent agent or the water-absorbent agent composition, aqueous polymerization or the reversed-phase suspension polymerization using the foregoing monomer in the form of an aqueous solution is particularly preferable.

When the aqueous solution (hereinafter referred to as "monomer aqueous solution") is used as the monomer, the concentration of the monomer in the aqueous solution is not especially limited, and may be determined depending on the temperature of the aqueous solution, the type of monomer, etc. However, the concentration is preferably in a range from 10% by mass to 70% by mass, and further preferably in a range from 20% by mass to 60% by mass. Moreover, when carrying out the aqueous polymerization, a solvent other than water may be used together according to need, and the kind of the solvent to be used together is not especially limited.

Note that the reversed-phase suspension polymerization is a polymerization method in which the monomer aqueous solution is suspended in a hydrophobic organic solvent. The reversed-phase suspension polymerization is disclosed in, for example, United States Patent Nos. 4,093,776, 4,367,323, 4,446,261, 4,683,274, 5,244,735, etc. The aqueous polymerization is a method for polymerizing the monomer aqueous solution without a dispersing solvent. The aqueous polymerization is disclosed in, for example, United States Patent Nos. 4,625,001, 4,873,299, 4,286,082, 4,973,632, 4,985,518, 5,124,416, 5,2.50,640, 5,264,495, 5,145,906, and 5,380,808, and European Patent Nos. 0,811,636, 0,955,086, and 0,922,717. In the present invention, the above-described monomers, initiators, etc. are applicable to these polymerization methods.

For initiating the polymerization, it is possible to use (i) a radical polymerization initiator, such as potassium persulfate, ammonium persulfate, sodium persulfate, t-butyl hydroperoxide, hydrogen peroxide, 2,2'-azobis (2-amidino propane) dihydrochloride and/or (ii) a photo polymerization initiator, such as 2-hydroxy-2-methyl-1-phenyl-propane-1-one. In view of the physical property, the amount of the polymerization initiator to be used is normally from 0.001 mole% to 2 mole% (with respect to the amount of the entire monomer), and preferably 0.01 mole% to 0.1 mole%.

Normally, obtained after the polymerization is a hydrous gel crosslinked polymer. According to need, this crosslinked polymer is dried, and is crushed before and/or after the drying. Thus, a water-absorbent agent is obtained. The drying is carried out in a temperature range normally from 60°C to 250°C, preferably from 100°C to 220°C, and more preferably from 120°C to 200°C. A drying time is determined depending on the surface area and moisture content (specified by the water content in the water-absorbent agent or the water-absorbent agent composition/measured as a degree of decrease after 3 hours drying at 180°C) of the polymer, and the type of a drying machine, so that the polymer has a desired moisture content.

The moisture content of the water-absorbent agent according to the present embodiment is not particularly limited, but preferably 1 to 30 mass%, more preferably 2 to 25 mass%, further preferably 3 to 15 mass%, particularly preferably 5 to 10 mass%. If the moisture content is greater than 30 mass%, the particles lose desirable fluidity, and will not be easily handled in the subsequent processing steps. On the other hand, if the moisture content is less than 1 mass%, the production cost increases typically due to an increase in drying time.

The water-absorbent agent thus produced preferably has a Centrifuge Retention Capacity (CRC; measurement method will be shown later in "Examples") of 8 g/g to 50 g/g, more preferably 10 g/g to 50 g/g, further preferably 20 g/g to 40 g/g, and most preferably 25 g/g to 35 g/g. The properties of the water-absorbent agent including CRC may be modified according to circumstances, but a CRC of less than 8 g/g or that greater than 50 g/g does not ensure the properties/effects of the water-absorbent.

As described, in an embodiment, the water-absorbent agent is manufactured through a step of producing a crosslinked polymer by carrying out crosslinking polymerization of an unsaturated monomer aqueous solution containing acid-group-containing unsaturated monomer as a main component in the presence of an internal crosslinking agent, and a step of drying the crosslinked polymer, adjusting the size of particles and carrying out another crosslinking with respect to the vicinity of the surface of each particle of the crosslinked polymer.

The particle size of the water-absorbent agent, which is defined by mass average particle diameter (D50), logarithm standard deviation ($\sigma\zeta$), and ratio of particles less than 150 $\mu$m in particle diameter, may be adjusted by classification after completing the water-absorbent agent composition, and therefore is not particularly limited. However, for ease of processing after completing the water-absorbent agent composition, the average particule size (D50) is preferably set to 200 $\mu$m to 500 $\mu$m, more preferably 200 $\mu$m to 450 $\mu$m, further preferably 220 $\mu$m to 450 $\mu$m, still further preferably 250 $\mu$m to 430 $\mu$m, particularly preferably 300 $\mu$m to 400 $\mu$m.

Further, the content of particles 300 $\mu$m to 600 $\mu$m in particle diameter with respect to the whole amount of water-absorbent agent particles is preferably 30 mass % or more, more preferably 40 mass % or more, further preferably 50 mass % or more, particularly preferably 60 mass % or more.

To adjust the particle size of the water-absorbent agent produced by reverse-phase suspension polymerization within the foregoing range, the particles may be subjected to dispersion polymerization or dispersion drying.

When carrying out aqueous solution polymerization, the particle size may be adjusted by pulverization and classification after drying. In this case, the mass average particle diameter D50 and the ratio of particles less than 150 $\mu$m in diameter are controlled so that the particles have a specific size distribution. For example, in the case of adjusting particle size by reducing the mass average particle diameter D50 to be less than 450 $\mu$m, and reducing the amount of particles less than 150 $\mu$m in diameter, the particles resulted from pulverization are classified by a general classifying device such as a sieve or the like so as to remove coarse particles and fine particles. In this case, the coarse particles to be removed preferably have a particle diameter of 500 $\mu$m to 5000 $\mu$m, more preferably 450 $\mu$m to 5000 $\mu$m, further preferably 450 $\mu$m to 2000 $\mu$m, particularly preferably 450$\mu$m to 1000 $\mu$m. Further, the fine particles to be removed preferably have a particle diameter less than 200 $\mu$m, more preferably less than 150 $\mu$m.

The coarse particles thus removed may be discarded, but most of the cases they are pulverized again for recycle. The fine particles thus removed may be discarded, but preferably to be aggregated again (described later) to increase yield.

The water-absorbent agent particles thus produced through pulverization and specific adjustment of particle size distribution have irregular pulverized shapes.

The fine particles removed by the particle size adjustment through pulverization/classification aggregate again to be larger particles or a particle agglomeration, so as to be recycled into the water-absorbent agent of the present embodiment. The conventional method of agglomerating the fine particles by kneading them with an aqueous solution, which method is disclosed, for example, in US patent No. 6228930, No. 5264495, No. 4950692, No. 5478879 and EP patent 844270, may be used for agglomerating the fine particles to be larger particles or a particle agglomeration, so as to recycle the fine particles into the water-absorbent agent of the present embodiment. The water-absorbent agent reproduced by this method has a porous structure.

The content of particles reproduced from the coarse particles or the fine particles in the water-absorbent agent of the present embodiment is preferably 0 to 50 mass %, more preferably 5 to 40 mass %, most preferably 10 to 30 mass%.

In comparison with the primary particles of the water-absorbent agent, the surface area of a given particle of the reproduced particles is larger than that of a particle identical in particle diameter of the primary particles. That is, the reproduced particle ensures a higher absorption speed and therefore superior in performance. The water-absorbent agent reproduced by agglomeration of fine particles is generally mixed with the water-absorbent agent resulted from the drying process before the water-absorbent agent is adjusted in particle size through pulverization/classification.

Moreover, a logarithm standard deviation ($\sigma\zeta$) of particle size distribution of the water-absorbent agent according to the present embodiment is 0.25 to 0.45, more preferably 0.25 to 0.43, further preferably 0.25 to 0.40, particularly preferably 0.26 to 0.38. The smaller the logarithm standard deviation ($\sigma\zeta$) of the particle size distribution is, the narrower the particle size distribution is. However, in the present invention, it is important that the particle size distribution of the water-absorbent agent composition is not only narrow, but also spread to a certain extent. If the logarithm standard

deviation ($\sigma\zeta$) is less than 0.25, the productivity greatly decreases due to decrease in yield or increase in number of recycling steps. On the other hand, if the logarithm standard deviation ($\sigma\zeta$) is more than 0.40, the particle size distribution is too large, and the desired performance may not be obtained.

The ratio of particles less than 150 $\mu$m in particle diameter is not more than 5 mass%, more preferably 0 to 4.5 mass%, further preferably 0 to 40. mass%, still further preferably 0 to 3.5 mass %. The ratio of particles equal to or greater than 850 $\mu$m in particle diameter is preferably not more than 5 mass%, more preferably 0 to 4.5 mass %, further preferably 0 to 4.0 mass%, still further preferably 0 to 3.5. mass%, particularly preferably 0 to 3.5 mass %. In the present invention, it is particularly preferred to meet both of the specific ranges for the ratio of particles less than 150 $\mu$m in particle diameter and for the ratio of particles equal to or greater than 850 $\mu$m in particle diameter.

Note that "the whole" used here means the entire part of the water-absorbent agent. Note also that "a particle less than 150 $\mu$m in diameter" in the present specification indicates a particle which passed through a sieve with 150 $\mu$m meshes in the classification using a JIS standard sieve (described later). Further, "a particle equal to or greater than 150 $\mu$m in diameter" indicates a particle remained on the sieve with 150 $\mu$m meshes in the same classification. This is applied for other sizes of sieve. Further, when 50% by mass of particles pass through a sieve with 150 $\mu$m meshes, the mass average particule diameter (D50) of the particles is regarded 150 $\mu$m.

The water-absorbent agent used for the water-absorbent agent composition obtainable by the method according to the present invention is produced by further carrying out surface crosslinking (secondary cross-linking) with respect to the particles having been subjected to crosslinking polymerization and dried.

There are various surface cross-linking agents for carrying out the surface cross-linking. However, in view of the physical property, generally used are a polyalcohol compound, an epoxy compound, a polyamine compound, a condensate of a polyamine compound and an haloepoxy compound, an oxazoline compound, a monooxazolidinone compound, a dioxazolidinone compound, a polyoxazolidinone compound, a polymetal salt, an alkylene carbonate compound, oxetane compound, cyclic urea compound etc.

Specific examples of the surface cross-linking agent are surface cross-linking agents disclosed in United States Patent No. 6,228,930, 6,071,976, 6,254,990, etc. The examples are: a polyalcohol compound, such as monoethylene glycol, diethylene glycol, triethylene glycol, tetraethylene glycol, polyethylene glycol, 1,2-propylene glycol, 1,3-propanediol, dipropylene glycol, 2,3,4-trimethyl-1,3-pentanediol, polypropylene glycol, glycerin, polyglycerin, 2-butene-1,4-diol, 1,4-butanediol, 1,3-butanediol, 1,5-pentanediol, 1,6-hexanediol, 1,2-cyclohexanedimethanol, mesoerythritol, xylitol, and sorbitol; an epoxy compound, such as ethylene glycol diglycidyl ether and glycidol; a polyamine compound, such as ethylenediamine, diethylenetriamine, triethylenetetramine, tetraethylenepentamine, pentaethylenehexamine, polyethyleneimine, and polyamidepolyamine; an haloepoxy compound, such as epichlorohydrin, epibromohydrin, and $\alpha$-methyl-epichlorohydrin; condensate of the polyamine compound and the haloepoxy compound; an oxazolidinone compound (US6,559,239), such as 2-oxazolidinone; an oxetane compound; a cyclic urea compound; and an alkylene carbonate compound (US5,409,771), such as ethylene carbonate. Among these cross-linking agents, it is preferable to use at least one selected from at least the oxetane compound (US2002/72,471), the cyclic urea compound, and the polyalcohol. It is more preferable to use at least one selected from an oxetane compound having 2 to 10 carbons and polyalcohol having 2 to 10 carbons. It is further preferable to use polyalcohol having 3 to 8 carbons.

The amount of the surface cross-linking agent is determined depending on the types of compounds or how the compounds are combined; however the amount is preferably falls within 0.001 parts by mass to 10 parts by mass, more preferably 0.01 parts by mass to 5 parts by mass, with respect to 100 parts by mass of water-absorbent agent.

Water may be used for the surface crosslinking. In this case, the amount of water is determined depending on the moisture content of the water-absorbent agent. However, the amount of water is preferably in a range from 0.5 part by mass to 20 parts by mass with respect to 100 parts by mass of the water-absorbent agent, more preferably from 0.5 part by mass to 10 parts by mass. Further, other hydrophilic organic solvent than water may be used in the present invention. The hydrophilic organic solvent is in a range from preferably 0 part by mass to 10 parts by mass, more preferably from 0 part by mass to 5 parts by mass, further preferably from 0 part by mass to 3 parts by mass, with respect to 100 parts by mass of the water-absorbent agent.

Further, among various mixing methods, it is preferable to use a method for (i) mixing the surface cross-linking agent with water and/or the hydrophilic organic solvent in advance according to need, and then (ii) spraying or dropping the resulting aqueous solution to the water-absorbent resin, and more preferably spraying the resulting solution to the water-absorbent agent. The average particle diameter of the droplets to be sprayed is preferably from 1 $\mu$m to 300 $\mu$m, and more preferably from 10 $\mu$m to 200 $\mu$m. In the process of mixture, a water-insoluble fine particle powder and/or a surfactant may coexist to an extent where the effect of the present invention is ensured.

The water-absorbent resin having been mixed with the cross-linking agent is preferably subjected to a heat treatment. The heating temperature (defined by a heat medium temperature) is preferably from 100°C to 250°C, more preferably from 150°C to 250°C. The heating time is preferably in a range from 1 minute to 2 hours. Preferred examples of a combination of the temperature and time are a combination of 180°C and 0.1 hour to 1.5 hours and a combination of 200°C and 0.1 hour to 1 hour.

In the present invention, it is preferable to carry out crosslinking of the water-absorbent agent using a tervalent polycation or polycation of a greater valency in addition to the surface crosskining agent. With the tervalent polycation or polycation of a greater valency on its particle surface, the water-absorbent agent of the present invention will have further superior liquid permeability when serving as a water-absorbent agent composition.

The tervalent polycation or polycation of a greater valency is selected from polymer polyamine or multivalent metal. The polymer polyamine is an amine compound containing three or more cationic groups in a molecule: The tervalent polycation or polycation of a greater valency is preferably water soluble. "Water-soluble" here means that at least 0.5g, more preferable at least 1g is dissolved with respect to 100g of water at 25°C. Further, "Water-insoluble" means that 0 to 0.5g is dissolved with respect to 100g of water at 25°C.

Examples of the tervalent polycation or polycation of a greater valency include a cationic polymer such as diethylenetriamine, triethylenetetramine, tetraethylenepentamine, pentaethylenehexamine, polyamine polyamine, polyethylene imine, polyallylamine, polyvinylamine, or multivalent metal salts. The weight-average molecular amount of the cationic polymer is preferably in a range from 1000 to 1 million, more preferably 10000, to 500000. The usage amount is preferably in a range of 0 to 10 parts by mass, preferably 0.001 to 8 parts by mass, more preferably 0.01 to 5 parts by mass.

The tervalent metal or metal of a greater valency is not limited, but a tervalent metal or a quadrant metal is particularly preferable. An example is a type of metal atom selected from a group consisting of Al, Fe, Ti, Hf, Zr and other transition metals. Among these, further preferably is a type of metal atom selected from a group consisting of Al, Fe, Ti, Hf, Zr, which have a strong coupling property with respect to a carboxylic group. Particularly preferable are Al and Zr.

The water-absorbent agent preferably contains the tervalent metal or metal of a greater valency in an amount of 0.01 to 10 mass %, more preferably 0.1 to 5.0 mass%, further preferably 0.2 to 2.0 mass %.

The tervalent metal or metal of a greater valency is not limited when serving as a water soluble compound. However, particularly preferred as a counter anion is an inorganic compound containing $OH^-$, $CO_3^{2-}$, or $SO_4^{2-}$, an organic acid such as acetic acid or propionic acid, and at least one type of compound selected from a halogen group. Examples of compound include aluminum sulfate (including hydrate), potassium aluminum sulfate, sodium aluminum sulfate, aluminum hydroxide, acetylacetone zirconium complex, zirconium acetate, propionic acid zirconium, zirconium sulfate, hexafluoro potassium zirconium, hexafluoro sodium zirconium, zirconium ammonium carbonate, zirconium potassium carbonate, and sodium zirconium carbonate. Among these, a water soluble compound is particularly preferable.

The tervalent metal or metal of a greater valency may be added before or after the surface crosslinking of the water-absorbent agent, or at the time of surface crosslinking. However, at the time of surface crosslinking or after the surface crosslinking are more desirable. After the surface crosslinking is most desirable.

The tervalent metal or metal of a greater valence to be added may have powder (fine particles) form or may be slurry (the particles are dispersed in water or organic solvent). However, the multivalent metal is preferably used in the form of multivalent metal solution in which the multivalent metal is dissolved in a solution in which water and organic solvent are mixed. The organic solvent is not limited, but monohydric alcohol such as isopropyl alcohol; multivalent alcohol' such as propylene glycol, or glycerine; organic acid such as acetic acid or lactic acid; and organic solvent easily mixed with water such as acetone or tetrahydrofuran are particularly preferable. Further, the multivalent metal solution may contain a tervalent metal compound or of less valency, such as sodium hydrate,' sodium carbonate, sodium hydrogen carbonate, sodium acetate, sodium lactate, potassium hydroxide, lithium hydroxide etc.

After the surface crosslinking, the SFC (Saline Flow Conductivity) of the water-absorbent agent is preferably not less than 30 (Unit: $10^{-7} \times cm^3 \times s \times g^{-1}$). The SFC denotes a liquid transmittance of the swollen water-absorbent agent. A greater SFC denotes a higher liquid transmittance. The measurement method for SFC will be specifically described later in "Examples".

The SFC of the water-absorbent agent is more preferably not less than 40 (Unit: $10^{-7} \times cm^3 \times s \times g^{-1}$), further preferably not less than 50 (Unit: $10^{-7} \times cm^3 \times s \times g^{-1}$), still further preferably not less than 60 (Unit: $10^{-7} \times cm^3 \times s \times g^{-1}$), most preferably not less than 70 (Unit: $10^{-7} \times cm^3 \times s \times g^{-1}$).

If the SFC of the water-absorbent agent is less than 30 (Unit: $10^{-7} \times cm^3 \times s \times g^{-1}$), liquid diffusion and liquid absorbency of the resulting water-absorbent composition under a load, such as body weight, decreases. As a result, when the water-absorbent agent composition is used as an absorber of an absorptive article such as paper diaper, the liquid does not diffuse into the absorber, which results in blocking of liquid. Such a diaper product causes a problem of liquid leakage or skin trouble.

The upper limit of SFC is not particularly limited, but the effect of the present invention is fully ensured with a SFC of around 1000 or 2000 (Unit: $10^{-7} \times cm^3 \times s \times g^{-1}$). A larger SFC may result in an increase in production cost.

Further, the Centrifuge Retention Capacity (CRC) of the water-absorbent agent after the surface crosslinking is preferably 10 to 40g/g, more preferably 15 to 35g/g, further preferably 18 to 33g/g, particularly preferably 20 to 30g/g. If the CRC falls below the lower limit, a large amount of water-absorbent agent is required for making a sanitary product such as paper diaper to ensure a desired absorbing property. On the other hand, if the CRC exceeds the upper limit, the gel strength decreases, and the SFC of the water-absorbent agent may fall outside the desirable range. An excessively high/low CRC is therefore not preferred.

(2) Water-insoluble organic/ inorganic particles

In order to ensure a high liquid diffusion velocity (LDV), the water-absorbent agent composition obtainable by the method of the present embodiment contains water-insoluble organic/inorganic particles. Preferable examples of water-insoluble organic particles include spherical mono-particles such as polyethylene, polypropylene, polystyrene, polybutadiene, polyacrylate, polymethacrylate, polyvinyl acetate, polyvinyl ether, thermoplastic polyester, polycarbonate, polyphenyleneoxide, polyepoxy, polyacetal, cellulose derivative, polyacrylonitrile, polyamide, thermoplastic polyurethane, polyvinyl chloride, polyvinylidene chloride, fluorocarbon polymer, polysulfone; and their derivatives.

Preferable examples of water-insoluble inorganic particles include a metal oxide such as silicon dioxide, aluminum oxide, iron oxide, titanium oxide, magnesium oxide, zirconium oxide, tin oxide, or cerium oxide.; silicic acids (salts), such as natural zeolite or synthetic zeolite; kaolin; talc; clay; and bentonite.

Among these, water-insoluble inorganic particles are particularly preferable. More preferable is at least one kind selected from a group consisting of silicon dioxide, aluminum oxide, titanium oxide, zirconium oxide, tin oxide, and cerium oxide. Further preferable is at least one kind selected from a group consisting of silicon dioxide, titanium oxide, zirconium oxide, and tin oxide, and still further preferable is amorphous silicon dioxide. It is allowable to use two or more kinds of them, and they may be combined as a composite.

The water-insoluble organic/inorganic particles are preferably hydrophilic. More specifically, the water-insoluble organic/inorganic particles easily attract an aqueous solution so that the mixture of them has a suspension state (or the mixture becomes an even solution like a colloid solution).

The average particle diameter of the water-insoluble organic/inorganic particles is 1 to 100nm, more preferably 1 to 80nm, further preferably 5 to 60nm, particularly preferably 10 to 50nm. By ensuring this range of particle diameter, it is possible to suppress enlargement of gaps between the particles of the water-absorbent agent composition after adding the water-insoluble organic/inorganic particles. With this effect, the liquid updrawing property of the water-absorbent agent composition is not likely to decrease.

The average particle diameter of the water-insoluble organic/ inorganic particles may be measured by one of the conventional methods. For example, one method may be that respective maximum and minimum diameters of 100 or more particles are measured by using $\times$ 50000 magnified images taken by a transmission-type electronic microscope, and the average particle diameter is found according to an average diameter of each particle that is calculated by averaging the maximum and minimum diameter.

Another method may be measurement using a scattering-type particle distribution measurement device using the dynamic light scattering method or the laser diffraction method. In the case of using commercially-available particles, the mean diameter may be found in the catalog.

The average particle diameter is preferably close to the diameter of a primary particle of the water-insoluble organic/inorganic particles.

In the case of using solid particles of water-insoluble organic/inorganic particles, if the particles are directly mixed, the water-insoluble organic/inorganic particles and the water-absorbent agent may not be evenly mixed. Further, the adhesion/coupling between the water-insoluble organic/ inorganic particles and the water-absorbent agent may not be sufficient. If the water-absorbent agent composition with such an inadequacy was used for an absorber of the absorptive article such as paper diaper, the water-insoluble organic/ inorganic particles may be separated or unevenly dispersed. The resulting absorptive article therefore may not ensure certain performance.

The foregoing defect is also seen as a great difference between the LDV (Liquid Diffusion Velocity) value for the bulk of water-absorbent agent composition (before classification) and that for water-absorbent agent composition classified into particles of 500 to 300 $\mu$m. The occurrence of the defect can be found by a liquid diffusion velocity (LDV) resistance test, which is suggested in the present embodiment for the first time. The liquid diffusion velocity (LDV) resistance test is described later in "Examples".

For this reason, the water-insoluble organic/inorganic particles are processed into a slurry 0.1 to 50mass % in solid content to be mixed with the water-absorbent agent. The solid content is more preferably 1 to 50 mass %, further preferably 5 to 45 mass%, and still further preferably 10 to 45 mass%. By thus mixing the slurry of the water-insoluble organic/inorganic particles with the water-absorbent agent, the particles to be mixed with the water-absorbent agent have the diameters close to the primary particle diameter. In preparing evenly-dispersed particles (such as the slurry, a suspension solution or a colloid solution) of the water-insoluble organic/inorganic particles; a dispersion agent or a stabilization agent may be used. Examples of dispersion agent or stabilization agent include surfactant, alkaline compound such as ammonia, sodium hydrate; acidic compound such as nitric acid, hydrochloric acid, sulfuric acid, or acetic acid; polyacrylic acid, and its ammonium salt, sodium salt, or potassium salt; organic solvent such as methanol, ethanol, isopropanol, ethylene glycol, ethylene glycol mono n-propylether, ordimethylacetamide may be used. The amount of the dispersion agent or the stabilization agent is 5 mass % or less, preferably 3 mass % or less, more preferably 1 mass % or less, with respect to the whole amount of the solution.

The amount of the water-insoluble organic/inorganic particles to be added to the water-absorbent agent is preferably 0.01 to 10 parts by mass, more preferably 0.05 to 5 parts by mass, further preferably 0.1 to 3 parts by mass with respect to 100 parts by mass of water-absorbent agent composition. If the amount of the water-insoluble organic/inorganic particles is greater than 10 parts by mass, the liquid updrawing speed (liquid diffusion velocity) of the water-absorbent agent composition decreases, which may results in unstable performance when the water-absorbent agent composition is used for an absorptive article such as paper diaper. On the other hand, if the amount of the water-insoluble organic/inorganic particles is less than 0.01 parts by mass, the resulting water-absorbent agent will not have a desirable LDV.

The dispersion solvent used for the slurry is not limited, and may be water, electrolyte aqueous solution, organic solvent or the aqueous solution thereof. Further, commercially-available colloidal silica, colloidal alumina, or colloidal titania may be preferably used for the slurry, in which case the particles very close to the primary particles are dispersed. Note that, in the case where the water-insoluble organic/inorganic particles are solid particles, the average particle diameter may be greater because of agglomeration of particles. Generally, it is difficult to bring the dispersion state of the solid particles in water or the like to be close to the dispersion state of the primary particles. For example, in the case of hydrophilic silica, the particles easily aggregate due to hydrogen bond between the plural silanol groups on the surface of particle, and the aggregated particles will not be easily separated to be particles again. In this case, the particle diameter may fall outside the range of average particle diameter of the water-insoluble organic/inorganic particles even when the solid particles are dispersed in a solvent. This may interfere production of proper water-absorbent agent. Therefore, as described above, by mixing the slurry of the water-insoluble organic/inorganic particles with the water-absorbent agent, the particles to be mixed with the water-absorbent agent maintain the diameters close to the primary particle diameter.

The water-absorbent agent having been mixed with the water-insoluble organic/inorganic particles is preferably subjected to a heat treatment. When carrying out the heat treatment, a heating temperature (defined by a heat medium temperature) is preferably from 60°C to 120°C, more preferably from 70°C to 100°C, and a heating time is preferably in a range from 1 minute to 2 hours. Preferred examples of a combination of the temperature and time are a combination of 60°C and 0.1 hour to 1.5 hours and a combination of 80°C and 0.1 hour to 1 hour. If the heating condition does not meet the foregoing ranges, for example, if it is carried' out under a greater temperature than 120°C or for more than 2 hours, the hydrophilic property of the particles may be lost.

As described, the water-absorbent agent composition obtainable by the method according to the present invention contains the water-insoluble organic/inorganic particles substantially equal in diameter to the primary particles. With this arrangement, it is possible to increase the liquid diffusion velocity (LDV) and the hydrophilic property of the surface of the water-absorbent agent composition without decreasing the liquid updrawing property.

(3) Water-absorbent Agent Composition

A
method for manufacturing the water-absorbent agent composition of the present embodiment includes the steps of (I) producing a crosslinked polymer by carrying out, in the presence of an internal crosslinking agent, crosslinking polymerization of an unsaturated monomer aqueous solution containing a monomer whose main component is acrylic acid and/or its salt; (II) producing a water-absorbent agent, having the saline flow conductivity (SFC) of 30 (more preferably 40) (Unit: $10^{-7} \times cm^3 \times s \times g^{-1}$), by drying the crosslinked polymer, adjusting the size of particles of the crosslinked polymer and carrying out surface crosslinking with respect to the vicinity of the surface of each particle of the crosslinked polymer, and (III) adding water-insoluble organic/inorganic fine particles (preferably, the above water-insoluble organic/inorganic fine particles having the hydrophilic property), the average particle diameter of which is 1 nm to 100 nm, to the water-absorbent agent and mixing them. Moreover, the water-insoluble organic/inorganic fine particles added as above is a 0.1 to 50 mass% solids slurry (or in a dispersion state or in a colloid solution state).

According to the above method, the water-insoluble organic/inorganic fine particles are more dispersed when they are mixed with the water-absorbent agent compared with the case where the water-insoluble organic/inorganic fine particles that are solids are mixed with the water-absorbent agent. Since the water-insoluble organic/inorganic fine particles whose particle diameters are small are put in the water-absorbent agent, they hardly widen the gaps between the particles of the water-absorbent agent. Therefore, it is possible to improve the hydrophilic property of the surface of the water-absorbent agent without deteriorating the capillary force of the water-absorbent agent. On this account, it is possible to improve the liquid updrawing property of the water-absorbent agent composition.

Moreover, liquid, such as water, is added to the water-absorbent agent at the same time the water-insoluble organic/inorganic fine particles are added. On this account, polymer molecules of the water-absorbent agent are slightly swollen, and the water-insoluble organic/inorganic fine particles are put in the water-absorbent agent with the polymer network open. Therefore, part of the water-insoluble organic/inorganic fine particles slightly enter into the water-absorbent agent from the surface thereof. Thus, the water-insoluble organic/inorganic fine particles hardly separate from the water-absorbent agent. Therefore, the liquid updrawing property of the water-absorbent agent composition hardly deteriorates even with environmental changes due to inappropriate storage or process damages at a manufacturer of sanitary materials (eg. diaper) using the water-absorbent agent as a material.

Moreover, since the water-absorbent agent is subjected to the surface crosslinking, it has excellent liquid permeability. Therefore, according to the above method, it is possible to manufacture the water-absorbent agent composition (i) which has both the liquid permeability and the liquid updrawing property that are conventionally incompatible with each other, and (ii) whose liquid updrawing property hardly deteriorates.

Moreover, the water-absorbent agent has a specific particle size. That is,

a method for manufacturing a water-absorbent agent composition of the present embodiment includes the steps of (I) producing a crosslinked polymer by carrying out, in the presence of an internal crosslinking agent, crosslinking polymerization of an unsaturated monomer aqueous solution containing a monomer whose main component is acrylic acid and/or its salt, (II) producing a water-absorbent agent by drying the crosslinked polymer, adjusting the size of particles of the crosslinked polymer and carrying out crosslinking with respect to the vicinity of the surface of each particle of the crosslinked polymer, the water-absorbent agent satisfying conditions (i) to (iv) below,

(i) mass average particle diameter (D50) is 200 $\mu$m to 500 $\mu$m (more preferably 200 to 450 $\mu$m)
(ii) percentage of particles less than 150 $\mu$m in diameter is not more than 5 mass % with respect to the whole particle amount
(iii) logarithm standard deviation ($\sigma\zeta$) of particle size distribution is 0.25 to 0.45
(iv) saline flow conductivity (SFC) is not less than 30 (more preferably 40) (Unit: $10^{-7}\times cm^3\times s\times g^{-1}$)

, and (III) adding water-insoluble organic/inorganic fine particles, the average particle diameter of which is 1 nm to 100 nm, to the water-absorbent agent and mixing them, and the water-insoluble organic/inorganic fine particles be a 0.1 to 50 mass % solids slurry.

Since the water-absorbent agent has the above particle size distribution, it becomes easy to adjust the particle size of the water-absorbent agent composition.

The water-absorbent agent composition obtainable by the method according to the present embodiment contains as a main component a polycarboxylic acid water-absorbent agent having a crosslinking structure which is produced by polymerizing an acid-group-containing unsaturated monomer, the water-absorbent agent composition containing water-insoluble organic or inorganic fine particles, the water-absorbent agent composition satisfying the foregoing set of preferable conditions (a) through (e), or another set of preferable conditions (a') through (d'). With these features, the water-absorbent agent composition according to the present embodiment is highly accurately adjusted in gap size between the particles, and therefore is superior in liquid permeability and liquid updrawing property.

The water-absorbent agent composition obtainable by the method of an embodiment is adjusted to have a specific particle size so as to obtain both the liquid permeability and the liquid updrawing property. The average mass particle diameter (D50) according to the condition (c) above of the water-absorbent agent composition is in a range from 200 $\mu$m to 420 $\mu$m, more preferably in a range from 220 $\mu$m to 420 $\mu$m, further preferably in a range from 250 $\mu$m to 420 $\mu$m, and especially preferably in a range from 300 $\mu$m to 420 $\mu$m.

Moreover, the logarithm standard deviation ($\sigma\zeta$) of the particle size distribution according to the condition (d) above is in a range from 0.25 to 0.40, more preferably in a range from 0.25 to 0.39, further preferably in a range from 0.25 to 0.38, and most preferably in a range from 0.28 to 0.35. The smaller the logarithm standard deviation ($\sigma\zeta$) of the particle size distribution is, the narrower the particle size distribution is. However, in the present embodiment, it is important that the particle size distribution of the water-absorbent agent composition is not only narrow, but also spread to a certain extent. If the logarithm standard deviation ($\sigma\zeta$) is less than 0.25, the productivity deteriorates significantly due to decrease in yield or increase in number of recycle steps. On the other hand, if the logarithm standard deviation ($\sigma\zeta$) is more than 0.40, the particle size distribution is too large, and the desired performance may not be obtained.

Moreover, the percentage of particles less than 150 $\mu$m in diameter according to the condition (e) above is 3 mass % or less witch respect to the whole particle amount, more preferably 0 mass % to 2.5 mass %, further preferably 0 mass % to 2.0 mass %, and especially preferably 0 mass % to 1.5 mass %. If the percentage of particles less than 150 $\mu$m in diameter is 3 mass % or more with respect to the whole particle amount, fine particles whose water absorption speed is high cause gel blocking, the liquid permeability deteriorates, the SFC deteriorates, a work environment deteriorates due to splashing of the fine particles. Therefore, such a high percentage is not preferable. Thus, in order to obtain both high LDV and high SFC in the water-absorbent agent composition obtainable by the method of the present invention and satisfying the conditions (a) through (e), the particle size distribution is controlled highly, that is, the average particle diameter is controlled to 200 $\mu$m to 420 $\mu$m and the logarithm standard deviation ($\sigma\zeta$) of the particle size distribution is controlled to 0.25 to 0.40. On this account, it is necessary to reduce the percentage of particles comparatively large in particle size. Specifically, the ratio of particles equal to or greater than 850 $\mu$m in particle diameter (measured by a JIS standard sieve) is preferably not more than 3 mass%; more preferably 0 to 2.5 mass %, further preferably 0 to 2.0 mass %, particularly preferably 0 to 1.5 mass%. It is particularly preferred to meet both of the specific ranges for the ratio of particles less than 150 $\mu$m in particle diameter and for the ratio of particles equal to or greater than 8.50 $\mu$m in particle diameter.

Further, the percentage of particles each of whose diameter measured by a JIS standard sieve is 710 $\mu$m or larger is preferably 0 to 5 mass %, more preferably 3 mass % or less, and further preferably 1 mass % or less with respect to the whole. Note that "the whole" used here means the whole water-absorbent agent composition.

Further, to ensure both of high LDV and high SFC, the content of particles 300 to 600 $\mu$m in diameter according to the condition (a') above needs to be not less than 30 mass %, more preferably not less than 40 mass %, further preferably not less than 50 mass %, particularly preferably not less than 60 mass %. Note that, the upper limit of the content of particles 300 to 600 $\mu$m in diameter is 100 mass %, however the upper limit is preferably not more than 90 mass %, more preferably not more than 80% in terms of productivity.

The average gap radius index under no pressure according to the condition (b') above is less than 310 $\mu$m, preferably less than 300 $\mu$m, more preferably less than 280 $\mu$m, further preferably less than 250 $\mu$m, particularly preferably less than 200 $\mu$m. If the average gap radius index under no pressure exceed 310 $\mu$m, the liquid updrawing property significantly decreases due to decrease of capillary force. This causes decrease in performance of diaper constituted of the water-absorbent agent composition. Note that, the lower limit of average gap radius, index under no pressure is not particularly limited. The lower limit is however preferably 30 $\mu$m.

The shape of the particle of the water-absorbent agent composition is not limited to a spherical shape, a crushed shape, an indeterminate shape, etc., but preferably used is an irregular pulverized shape obtained by pulverization. Further, in view of a balance between the liquid permeability and the liquid updrawing property, the bulk specific gravity (defined by JIS K-3362 : 1998) of the water-absorbent agent composition is preferably in a range from 0.40 g/ml to 0.80 g/ml, more preferably in a range from 0.50 g/ml to 0.75 g/ml, and further preferably in a range from 0.60 g/ml to 0.73 g/ml.

Note that adjustment of the particle size may be carried out by polymerization, gel pulverization (Other name: gel fragmentation), drying, pulverization, classification, granulation, mixing of plural kinds of particles of the water-absorbent agent(s) and/or particles of the water-absorbent agent compositioh(s), etc.

In the water-absorbent agent composition, the decreasing rate of the liquid distribution velocity (LDV) according to the condition (a) above is not more than 30%. Note that, the lower limit of the LDV degreasing rate may be a negative value. The lower limit is generally -10%, and more preferably 0%. The decreasing rate of the LDV is an index for measuring the impact resistance of the liquid distribution Velocity of the water-absorbent agent composition, and is calculated as the decreasing rate of the LDV before/after the LDV resistance test by the following formula.

$$\text{Decreasing Rate of LDV (\%)} = \{(LDV_1 - LDV_2) / LDV_1\} \times 100$$

In this formula, LDV 1 denotes the LDV (mm/s) before the LDV resistance test, and $LDV_2$ denotes the LDV (mm/s) after the LDV resistance test.

The LDV is a parameter which shows the liquid updrawing property and can be obtained by a measurement method explained in Examples below. The LDV can be calculated by the following formula.

$$LDV \ (mm/s) = 100(mm) / WR \ (s)$$

In this formula, WR denotes the liquid updrawing speed. A test method of the WR (Wicking Rate) will be described in details in Examples bellow.

In terms of improving performances of absorbent articles such as paper diapers and sanitary napkins, the LDV relates to a velocity of liquid diffusing mainly in an absorber of an absorbent article, and particularly to an initial velocity of liquid to be absorbed.

Note that the LDV resistance test is a test carried out by putting the water-absorbent agent composition in a predetermined vessel and then vibrating the vessel for a certain time. Details of a method of this test will be explained in Examples below.

The decreasing rate of the LDV of the water-absorbent agent composition according to the condition (a) above is more preferably 25% or less, further preferably 20% or less, and especially preferably 15% or less. If the decreasing rate of the LDV is 30% or less, the LDV of the water-absorbent agent composition hardly deteriorates due to mechanical damages (process damages) or with time. Therefore, even after the water-absorbent agent composition, is applied to an absorbent article, the liquid updrawing property can be maintained for a long time satisfactorily.

Moreover, the LDV of the water-absorbent agent composition (the water-absorbent agent composition satisfying the conditions (a) through (e), and the water-absorbent agent composition satisfying the conditions (a') through (d')) after the LDV resistance test is preferably 1.3 mm/s or more, more preferably 1.5 mm/s or more, further preferably 1.7 mm/s or more, and especially preferably 2.0 mm/s or more, particularly preferably 2.5mm or more. If the water-absorbent agent composition whose LDV after the LDV resistance test is less than 1.3 mm/s is used as an absorber of an absorbent article such as a paper diaper and a sanitary napkin, liquid is not absorbed by the absorbent article attached along a hip in practical use. Therefore, the water-absorbent agent composition is unsuitable for practical use.

Moreover, the LDV of the water-absorbent agent composition according to the condition (c') above before the LDV resistance test is 2.0 mm/s or more, preferably 2.1 mm/s or more, preferably 2.2 mm/s or more, further preferably 2.3 mm/s or more, particularly preferably 2.5mm/s. The LDV of the water-absorbent agent composition satisfying the conditions (a) through (e) before the LDV resistance test is preferably 2.0 mm/s or more, more preferably 2.1 mm/s or more, further preferably 2.2 mm/s or more, still further preferably 2.3 mm/s or more, particularly preferably 2.5mm/s or more.

If the water-absorbent agent composition whose LDV before the LDV resistance test is less than 2.0 mm/s is used as an absorber of an absorbent article such as a paper diaper and a sanitary napkins, it may not be possible to secure the liquid updrawing property, which is necessary for the absorbent articles, because of the deterioration of the liquid updrawing property of the water-absorbent agent composition due to process damages in manufacturing steps of the absorbent article, changes with time, etc, Note that, the upper limit of LDV is not particularly limited, but a LDV of about 10mm/s is generally sufficient.

The SFC of the water-absorbent agent composition according to the condition (b) above is 60 (Unit: $10^{-7}cm^3 \cdot s/g$) or more, preferably 70 (Unit: $10^{-7}cm^3 \cdot s/g$) or more, preferably 80 (Unit: $10^{-7}cm^3 \cdot s/g$) or more, and especially preferably 90 (Unit: $10^{-7}cm^3 \cdot s/g$) or more.

The SFC of the water-absorbent agent composition according to the condition (d') above is 30 (Unit: $10^{-7}cm^3 \cdot s/g$) or more, preferably 40 (Unit: $10^{-7}cm^3 \cdot s/g$) or more, preferably 60 (Unit: $10^{-7}cm^3 \cdot s/g$) or more, further preferably 70 . (Unit: $10^{-7}cm^3 s/g$) or more, particularly preferably 80 (Unit: $10^{-7}cm^3 \cdot s/g$) or more, and most preferably 90 (Unit: $10^{-7}cm^3 \cdot s/g$) or more.

If the SFC is less than 30 (Unit: $10^{-7}cm^3 \cdot s/g$), the liquid diffusion and liquid absorbency of the water-absorbent agent composition under a load, such as body weight, decreases. As a result, when the water-absorbent agent composition is used as an absorber of an absorbent article such as a paper diapers, the liquid does not diffuse in the absorbent article, which results in blocking of liquid. Such a diaper causes a problem of liquid leakage or skin trouble.

Note that, the water-absorbent agent composition satisfying the condition (a) through (e) preferably further satisfies at least one of the conditions (a') through (d'). Similarly, the water-absorbent agent composition satisfying the conditions (a') through (d') preferably further satisfies at least one of the conditions (a) through (e).

Moreover, it is preferable that the water-absorbent agent composition have the capillary suction index (CSI) of 85 or more. The CSI is an index showing the capillary suction power of the water-absorbent agent composition, and can be calculated as a sum of the respective capillary suction forces (CSF) of the water-absorbent agent composition subjected to respective negative pressure gradients of 0 cm, 10 cm, 20 cm and 30cm. Details of a test method of the CSI will be described in Examples below.

The CSI of the water-absorbent agent composition is more preferably 88 or more, further preferably 90 or more, an especially preferably 95 or more. Note that, the upper limit of CSI is not particularly limited, but the CSI is generally about 200 in the present invention.

If the water-absorbent agent composition whose CSI is less than 85 is used as an absorber of an absorbent article such as a paper diaper and a sanitary napkin, the liquid absorbency is insufficient. Such absorbent article is insufficient for practical use, and especially liquid suction in a vertical direction when the absorbent article is attached is insufficient, which is not preferable.

Moreover, it is preferable that the water-absorbent agent composition have the absorbency against pressure (AAP) of 22 g/g or more. The AAP is an absorbency of the water-absorbent agent composition under pressure. Details of a test method of the AAP will be described in Examples below.

The AAP of the water-absorbent agent composition is more preferably 23 g/g or more, further preferably 24 g/g or more, and especially preferably 25 g/g or more. Note that, the upper limit of AAP is generally about 35 g/g.

If the AAP is less than 22g/g, the liquid diffusion and liquid absorbency of the water-absorbent agent composition under a load, such as body weight, decreases. As a result, when the water-absorbent agent composition is used as an absorber of an absorbent article such as a paper diaper, the liquid does not diffuse in the absorbent article, which results in blocking of liquid. Such a diaper causes a problem of liquid leakage or skin rouble.

Moreover, the centrifuge retention capacity (CRC) of the water-absorbent agent composition is preferably 10 g/g to 40 g/g, more preferably 15 g/ g to 35 g/g, further preferably 18 g/g to 33 g/g, and especially preferably 20 g/g to 30 g/g. If the water-absorbent agent whose CRC of the water-absorbent agent is less than the lower limit of the above range is used in a sanitary material such as a paper diaper, the sanitary product needs a large amount of water-absorbent agents so as to obtain a desired amount of absorption. Therefore, it is not preferable that the CRC of the water-absorbent agent be less than the lower limit of the above range. Moreover, if the CRC of the water-absorbent agent is more than the upper limit of the above range, the gel strength becomes low, and it becomes difficult to obtain the water-absorbent agent whose SFC is in a desired range. Therefore, it is not preferable that the CRC of the water-absorbent agent be more than the upper limit of the above range.

Moreover, the liquid permeability and the liquid updrawing property are conventionally incompatible with each other. However, the water-absorbent agent composition obtainable by the method of the present invention has both properties which are improved in a balanced manner, and the WR is much more excellent than the AAP or the SFC.

That is, the balance between the liquid permeability and the liquid updrawing property of the water-absorbent agent composition is expressed by a liquid suction efficiency defined by the liquid permeability/the liquid updrawing speed, that is, SFC/WR. The liquid suction efficiency (SFC/WR) of the water-absorbent agent composition obtainable by the method of the present invention is preferably 0.50 to 100 (Unit: $10^{-7} \times cm^3 \times g^{-1}$), further preferably 0.70 to 100 (Unit: $10^{-7} \times cm^3 \times g^{-1}$), and especially preferably 1.00 to 100 (Unit: $10^{-7} \times cm^3 \times g^{-1}$). The water-absorbent agent composition obtainable by the method of the present invention has an excellent balance between the liquid permeability and the liquid updrawing property, and is suitable for use as a sanitary material.

Morever, the water-absorbent agent composition obtainable by the method of the present invention has an excellent balance between the centrifuge retention capacity and the liquid updrawing property, and this balance is expressed by a no pressure suction efficiency defined by the centrifuge retention capacity/the liquid updrawing speed, that is, CRD/WR. The no pressure suction efficiency (CRC/WR) of the water-absorbent agent composition obtainable by the method of the present invention is preferably 0.15 to 2 (g/g/s), further preferably 0.20 to 2 (g/g/s), and especially preferably 0.25 to 2 (g/g/s). The water-absorbent agent composition obtainable by the method of the present invention has an excellent balance between the centrifuge retention capacity and the liquid updrawing property; and is suitable for use as a sanitary material.

Moreover, the water-absorbent agent composition obtainable by the method of the present invention has an excellent balance between the absorbency against pressure and the liquid updrawing property, and this balance is expressed by a pressure suction efficiency defined by the absorbency against pressure/the liquid updrawing speed, that is, AAP (g/g)/WR (s). The pressure suction efficiency (AAP/WR) of the water-absorbent agent composition is preferably 0.15 to 2 (g/g/s), further preferably 0.20 to 2 (g/g/s) or less, and especially preferably 0.25 to 2 (g/g/s). The water-absorbent agent composition obtainable by the method of the present invention has an excellent balance between the absorbency against pressure and the liquid updrawing property, and is suitable for use as a sanitary material.

Moreover, the moisture content of the water-absorbent agent composition obtainable by the method of the present invention is preferably 1 to 15%, more preferably 2.5% to 15 mass%, further preferably 2.5% to 13%, and most preferably 2.5% to 10%.

If the moisture content is more than 15 mass %, the water absorption ratio of the water-absorbent agent composition may deteriorate. If the moisture contend is less than 1 mass %, the LDV of the water-absorbent agent composition may deteriorates.

The amount of water soluble components in the water-absorbent agent composition obtainable by the method of the present invention is preferably 25 mass % or less (the lower limit is 0 mass %), more preferably 20 mass % or less, and further preferably 15 mass % or less.

Moreover, regarding the color of the water-absorbent agent composition obtainable by the method of the present invention, a YI (Yellow Index, see European Patent Nos. 942,014 and 1,108,745) of the water-absorbent agent composition obtainable by the method of the present invention is preferably 0 to 15, more preferably 0 to 13, further preferably 0 to 10, and especially preferably 0 to 5. Further, the content of remaining monomers of the water-absorbent agent composition obtainable by the method of the present invention is preferably 0 ppm to 400 ppm, and more preferably 0 ppm to 300 ppm.

Moreover, in a water-absorbent agent composition obtainable by the method of the present invention and a method for manufacturing the same, deodorants, antibacterial agents, aroma chemicals, foaming agents, pigments, dyes, plasticizers, adhesives, surfactants, fertilizers, oxidizing agents, reducers, water, salts, chelating agents, disinfectants, hydrophilic polymers such as polyethylene glycol, paraffins, hydrophobic polymers, thermoplastic resins such as polyethylene and polypropylene, thermosetting resins such as polyester resin and urea resin, etc. may be added, according to need, to the water-absorbent agent and/or the water-absorbent agent composition, as far as the liquid updrawing speed. (liquid distribution velocity) does not deteriorate (for example, 0 to 10 mass parts with respect two 100 mass parts of the water-absorbent agent and/or the water-absorbent agent composition).

The water-absorbent agent composition obtainable by the method of the present invention has an excellent hygroscopic property or water absorbing property, and can be used in applications, such as agriculture, horticulture, cable water stop agents, civil engineering, architecture, and food products, in which the water-absorbent agent has been used conventionally. In addition, the water-absorbent agent composition obtainable by the method of the present invention has both the liquid permeability and the liquid updrawing property which are necessary physical properties for an absorber of an absorbent article, so that it can be used suitably as a fixation agent (absorption gelling agent) for urine, feces, or blood.

The absorber is usually formed so as to contain the water-absorbent agent composition. In the absorber, the content (core concentration) of the water-absorbent agent composition with respect to the total weight of the water-absorbent agent composition and hydrophilic fiber is preferably 20 mass % to 100 mass %, more preferably 30 mass % to 100 mass %, further preferably 30 mass % to 90 mass %, and especially preferably 40 mass % to 80 mass %. If the core concentration is less than 20 mass %, it is difficult to utilize the characteristics of the water-absorbent agent, composition.

One preferable example of use of an absorber using the water-absorbent agent composition obtainable by the method of the present invention is an application to a water-absorbent complex having expansion anisotropy (expansibility in a thickness) direction) disclosed in U.S. Patent No. 5,853,867. By using the water-absorbent agent composition, having excellent diffusibility, it is possible to obtain an absorber which has not only the expansibility in a thickness direction but also dramatically improved liquid diffusibility in a lateral direction (plane direction).

Preferably, the absorber is formed by compression molding so as to have a density of 0.06 g/cc to 0.50 g/cc and a basic weight of 0.01 g/cm$^2$ to 0.20 g/cm$^2$. Note that a fibrous substrate used is hydrophilic fiber, such as fractured wood pulp, cotton linter, crosslinked cellulose fiber, rayon, cotton, sheep wool, acetate, and vinylon. Moreover, the fibrous substrate used is preferably each of their air laid product.

Further, the absorbent article is, for example, an absorbent article including the above absorber, a front face sheet having liquid transmittance, and a back face sheet having the liquid impermeability. Specific examples of the absorbent article are sanitary materials such as adult paper diapers whose market have been remarkably growing in recent years, child diapers, sanitary napkins, and so-called incontinence pads.

As described, the water-absorbent agent composition obtainable by the method according to an embodiment of the present invention contains as a main component a polycarboxylic acid water-absorbent agent having a crosslinking structure which is produced by polymerizing an acid-group-containing unsaturated monomer, the water-absorbent agent compositions containing water-insoluble organic or inorganic fine particles, the water-absorbent agent composition satisfying the following set of conditions (a) through (e):

(a) decreasing rate of a liquid distribution velocity (LDV) is not more than 30%;
(b) saline flow conductivity (SFC) is not less than 60 (Unit: $10^{-7}$cm$^3$·s/g);
(c) mass average particle diameter (D50) is 200 to 420 $\mu$m;
(d) logarithm standard deviation ($\sigma\zeta$) of particle size distribution is 0.25 to 0.40;
(e) percentage of particles less than 150 $\mu$m in diameter is not more than 3 mass % with respect to the whole particle amount.

With this feature, it is possible to provide the water-absorbent agent composition (i) which has both the liquid permeability and the liquid updrawing property that are conventionally incompatible with each other and (ii) whose liquid updrawing property hardly deteriorates.

The water-absorbent agent composition obtainable by the method according to the present invention is preferably adjusted so that a liquid distribution velocity (LDV) of the water-absorbent agent composition before a liquid distribution velocity resistance test is not less than 2.0mm/s.

According to the above, since the liquid distribution velocity (LDV) of the water-absorbent agent composition immediately after its manufacturing is high, it is possible to secure the liquid updrawing property sufficiently.

Further, the water-absorbent agent composition obtainable by the method according to an embodiment of the present invention contains as a main component a polycarboxylic acid water-absorbent agent having a crosslinking structure which is produced by polymerizing an acid-group-containing unsaturated monomer, the water-absorbent agent composition containing water-insoluble organic or inorganic fine particles, the water-absorbent agent composition satisfying the following set of conditions (a') through (d'):

(a') content of particles 300 to 600 $\mu$m in diameter is not less than 30 mass %
(b') average gap radius index under no pressure is less than 310 $\mu$m
(c') a liquid distribution velocity (LDV: measured before the LDV resistance test) is not less than 2.0mm/s
(d') saline flow conductivity (SFC) is not less than 30 (Unit: ($10^{-7}$cm$^3 \times$s$\times$g$^{-1}$).

With this feature, it is possible to provide the water-absorbent agent composition (i) which has both the liquid permeability and the liquid updrawing property that are conventionally incompatible with each other and (ii) whose liquid updrawing property hardly deteriorates.

The water-absorbent agent composition obtainable by the method according to the present invention is preferably adjusted so that the water-insoluble organic or inorganic fine particles are hydrophilic inorganic particles.

The water-absorbent agent composition obtainable by the method according to the present invention is preferably adjusted so that the hydrophilic inorganic particles are particles 1 to 100nm in average particle diameter constituted of one or plural materials selected from a group consisting of amorphous silicon dioxide, titanium oxide, and alumina oxide.

According to the above, the inorganic particle, having the hydrophilic property, which is at least one selected from a group consisting of amorphous silicon dioxide, titanium oxide, and alumina oxide has very small average particle diameter, that is, 1 nm to 100 nm. Moreover, the binding force between the primary particles of the inorganic particle is comparatively weak. Therefore, by shearing the inorganic particles, or by dispersing the inorganic particles in a solution under specific conditions, it is possible to reduce the particle diameter to a diameter close to that of the primary particle even if the inorganic particle is aggregated particles. On this account, the inorganic particles disperse well on the surface of the water-absorbent agent, and the inorganic particles, each of whose diameter is close to that of the primary particles, are put on the surface of the particle of the water-absorbent agent of the water-absorbent agent composition and in the gap between water-absorbent agent particles in the vicinity of the surface of the water-absorbent agent. Since the inorganic particles whose particle diameters are small are put in the water-absorbent agent composition, they hardly widen the gaps between particles of the water-absorbent agent of the water-absorbent agent composition. The capillary force is inversely proportional to the diameter of the gap between particles. Therefore, the water-absorbent agent composition obtainable by the method of the present invention in which the diameter of the gap between particles of the water-absorbent agent hardly become wide can further suppress a decrease in the capillary force of the water-absorbent agent composition and improve the hydrophilic property of the surface of the water-absorbent agent composition. Therefore, it is possible to further improve the liquid updrawing property of the water-absorbent agent compositions.

The water-absorbent agent composition obtainable by the method according to the present invention is preferably adjusted so that a liquid distribution velocity (LDV) of the water-absorbent agent composition after a liquid distribution velocity resistance test is not less than 1.3mm/s.

According to the above, the water-absorbent agent composition secures an adequate liquid updrawing property even if the water-absorbent agent composition is affected by environmental changes, such as storage conditions or process damages at a manufacturer of sanitary materials such as diapers using the water-absorbent agent as a material.

The water-absorbent agent composition obtainable by the method according to the present invention is preferably adjusted so that a capillary suction index (CSI) of the water-absorbent agent composition is not less than 85.

According to the above, it is possible to further improve the liquid updrawing property of the water-absorbent agent compositions in a vertical direction under pressure higher than that used when measuring the LDV.

The water-absorbent agent composition obtainable by the method according to the present invention is preferably adjusted so that an absorbency against pressure (AAP) of the water-absorbent agent composition is not less than 22 g/g.

According to the above, since the water-absorbent agent composition has excellent liquid diffusion and liquid absorption under a load such as body weight, it is possible to prevent liquid blocking in the water-absorbent agent composition. Therefore, it is possible to provide the absorbent article which does not cause liquid leakage, skin trouble, etc. when used as an absorber of the absorbent article such as a paper diaper.

The water-absorbent agent composition obtainable by the method according to the present invention is preferably adjusted so that a moisture content of the water-absorbent agent composition is 1 to 15 mass % (more preferably 2.5 to 15 mass %).

According to the above, it is possible to improve the hydrophilic property of the water-absorbent agent, and also possible to prevent (i) deterioration of a powder handling property due to high moisture content, and (ii) a decrease in the liquid distribution velocity due to low moisture content.

A method for producing a water-absorbent agent composition according to the present invention comprises the step of:

(a) carrying out crosslinking polymerization of an unsaturated monomer solution constituted of a monomer containing as a main component an acrylic acid and/or its salt so as to produce a crosslinked polymer in the presence of an internal crosslinking agent,
the method further comprising the steps of:
(b) drying the crosslinked polymer, adjusting the particle size of the crosslinked polymer; and carrying out another crosslinking with respect to a vicinity of the' surface of each particle of the crosslinked polymer so as to obtain a water-absorbent agent which satisfy the following set of conditions (i) through (iv):

(i) mass average particle diameter (D50) is 200 to 500 $\mu$m;
(ii) percentage of particles less than 150 $\mu$m in diameter is not more than 5 mass % with respect to the whole particle amount;

(iii) logarithm standard deviation ($\sigma\zeta$) of particle size distribution is 0.25 to 0.45;

(iv) saline flow conductivity (SFC) is not less than 30 (Unit: $10^{-7}cm^3 \times s \times g^{-1}$);

and

(c) mixing the water-absorbent agent with water-insoluble organic or inorganic fine particles 1 to 100nm in average particle diameter,

wherein:

the water-insoluble organic or inorganic fine particles are processed into a slurry. 0. 1 to 50 mass % in solid content to be mixed with the water-absorbent agent.

Thus, it is possible to manufacture the water-absorbent agent composition (i) which has both the liquid permeability and the liquid updrawing property that are conventionally incompatible with each other and (ii) whose liquid updrawing property hardly decreases.

[EXAMPLES]

The present invention will be explained further using Examples and Comparative Examples, however the present invention is not limited to these Examples. Performances of the water-absorbent agent composition (or the water-absorbent agent) are measured by the following methods. Electric instruments in Examples are used under conditions of 200V or 100V and 60Hz. Further, unless otherwise stated, the water-absorbent agent composition or the water-absorbent agent is used under conditions of 25°C $\pm$ 2°C and 50%RH. Moreover, used as a physiological saline is a 0.90 mass % sodium chloride aqueous solution.

Note that, if the moisture content of the water-absorbent agent or the water-absorbent agent composition taken from diaper or the like is more than 5 mass %, the agent or the agent composition is subjected to reduced-pressure drying under 100°C until the moisture content becomes equal to or less than 5 mass % before carrying out the later-described performance measurement.

Moreover, chemicals or appliances described in the following methods and Examples may be replaced with other comparable chemicals or appliances accordingly.

[Centrifuge Retention Capacity (CRC)]

W (gram) (about 0.20 gram) of the water-absorbent agent composition (or the water-absorbent agent) obtained in Example or Comparative Example below was uniformly put into a bag (60 mm $\times$ 85 mm, its material is compliant with EDANA ERT 441.1 -99) made of nonwoven fabric, and the bag was sealed and immersed in a 0.90 mass % physiological saline whose temperature was adjusted to 25°C $\pm$ 2°C. The bag was pulled out of the solution 30 minutes later, and the solution was drained from the bag using a centrifuge (produced by Kokusan Co., Ltd., Type H-122 small centrifuge) at 250G (250 $\times$ 9.81 m/s$^2$) for 3 minutes. Then, a weight W2 (gram) of the bag was measured. Moreover, the same operation was carried out without the water-absorbent agent composition (or the water-absorbent agent). Then, a weight W1 (gram) of the bag was measured. Then, the CRC (g/g) was calculated by the following formula using the masses W, W1 and W2.

$$CRC\ (g/g) = \{(\ W2\ (gram) - W1\ (gram)) / W\ (gram)\} - 1$$

[Absorbency Against Pressure (AAP)]

A stainless steel 400 mesh metal gauze (mesh size (mesh opening size) = 38 $\mu$m) was fused to the bottom of a plastic supporting cylinder having an internal diameter of 60 mm, and W (gram) (about 0.90 gram) of the water-absorbent agent composition (or the water-absorbent agent) was uniformly sprinkled on this metal gauze. Then, a piston and a load were placed in this order on the water-absorbent agent composition (or the water-absorbent agent). The piston, and the load were adjusted so as to uniformly apple load of 4.83 kPa (0.7 psi) to the water-absorbent agent composition (or the water-absorbent agent). Each of the piston and the load has an external diameter which is slightly smaller than 60 mm so that (i) there is no gap between the piston (the load) and the supporting cylinder and (ii) the vertical motions of the piston (the load) were smooth. Before placing the load, a weight W3 (gram) of this measuring device (that is, a total weight of the supporting cylinder, the water-absorbent agent composition (or the water-absorbent agent) and the piston) was measured.

A glass filter (produced by Sogo Laboratory Glass Works Co., Ltd., Pore Diameter: 100 $\mu$m to 120 $\mu$m) having a diameter of 90 mm and a thickness of 5 mm was placed inside a petri dish having a diameter of 150 mm. Then, the 0.90 mass % physiological saline was added to the petri dish so that the liquid level of the 0.90 mass % saline solution is the same as the top surface of the glass filter. Then, a piece of filter paper (produced by Toyo Roshi Kaisha, Ltd., ADVANTEC; No.2, JIS P 3801) having a diameter of 90 mm was placed on the glass filter, so that the surface of the filter paper got wet entirely, and excessive liquid was removed.

The measuring device was placed on the wet filter paper, and the liquid was absorbed under load. When the liquid surface became lower than the top surface of the glass filter, the liquid was added so that the liquid level was kept constant. The measuring device was lifted up an hour later, and a weight W4 (gram) (a total weight of the supporting cylinder swollen water-absorbent agent composition (or swollen water-absorbent agent) and the piston) not including the weight of the load was measured. Then, the AAP (g/g) was calculated by the following formula using the masses W, W3 and W4.

$$ \text{AAP (g/g)} = (\text{W4 (gram)} - \text{W3 (gram)}) \ / \ \text{W (gram)} $$

[Mass Average Particle Diameter (D50) and Logarithm Standard Deviation ($\sigma\zeta$)]

The water-absorbent agent composition (or the water-absorbent agent) was sieved by a JIS standard sieve having a mesh size of 850 $\mu$m, 710 $\mu$m, 600 $\mu$m, 500 $\mu$m, 300 $\mu$m, 150 $\mu$m, 45 $\mu$m, or the like, and a residual percentage R was plotted to a logarithmic probability sheet Thus, a particle diameter corresponding to R = 50 mass % was considered as the mass average particle diameter (D50). Moreover, the logarithm standard deviation ($\sigma\zeta$) is expressed by the following formula. The smaller $\sigma\zeta$ is, the narrower the particle size distribution is.

$$ \sigma\zeta = 0.5 \times \ln(\text{X2} \ / \ \text{X1}) $$

(where X1 denotes a particle diameter when R = 84.1%, and X2 denotes a particle diameter when R = 15.9%)

The classification method used when measuring the mass average particle diameter (D50) and the logarithm standard deviation ($\sigma\zeta$) was carried out as follows. 10.0 grams of the water-absorbent agent composition (or the water-absorbent agent) was put into the JIS standard sieve (THE IIDA TESTING SIEVE: Diameter of 8 cm) having a mesh size of 850 $\mu$m, 710 $\mu$m, 600 $\mu$m, 500 $\mu$m, 300 $\mu$m, 150 $\mu$m, 45 $\mu$m, or the like, under conditions of room temperature (20°C to 25°C) and 50% RH. Then, the water-absorbent agent composition (or the water-absorbent agent) was classified by a sieve shaker (IIDA SIEVE SHAKER, TYPE: ES-65, SER. No. 0501) for five minutes.

[Saline Flow Conductivity (SFC)]

The SFC is a value showing the liquid transmittance of the swollen water-absorbent agent. The larger the SFC is, the hither the liquid transmittance is.

The following was carried out in accordance with a saline flow conductivity (SFC) test disclosed in a published Japanese translation of PCT international publication for patent application No. 9-509591 (Tokuhyohei 9-509591).

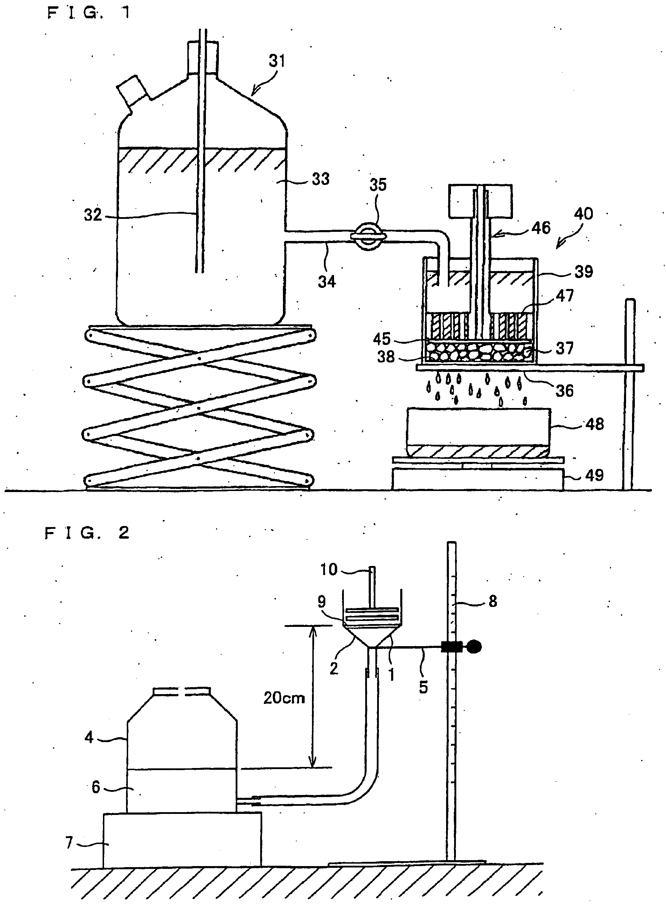

The following will explain an apparatus used for the SFC test in reference to Figure 1.

As shown in Figure 1, a glass tube 32 was inserted into a tank 31, and the lower end of the glass tube 32 was located so that the liquid level of a 0.69 mass % physiological saline 33 was maintained to be 5 cm above the bottom of a swollen gel 37 in a cell 39. The 0.69 mass % physiological saline 33 in the tank 31 was supplied to the cell 39 through an L-shaped tube 34 having a cock. A vessel 48 for collecting the liquid having passed through the cell 39 was placed under the cell 39, and this vessel 48 was placed on an even balance 49. The internal diameter of the cell 39 was 6 cm, and a No.400 stainless steel metal gauze (mesh size 38 $\mu$m) 38 was provided at the bottom of the cell 39. An opening 47 allowing the liquid to pass through was formed at a lower portion of a piston 46, and a glass filter 45 having excellent permeability was provided at a bottom of the piston. 46 so that the water-absorbent agent composition (or the water-absorbent agent) or the swollen gel does not get into the opening 47. The cell 39 was placed of a base for mounting the cell 39, and a stainless steel metal gauze which does not disturb the passing of the liquid was placed on a surface of the base, the surface, being in contact with the cell 39.

Using the apparatus shown in Figure 1 the water-absorbent agent (0.900 gram) uniformly put into a vessel 40 swelled in artificial urine under pressure of 2.07 kPa (about 0.3 psi) for 60 minutes, and then, the height of a gel layer of the gel 37 was recorded. Next, the' 0.69 mass %. Physiological saline. 33 was supplied from the tank 31 at a certain hydrostatic pressure so as to pass through the swollen gel layer under pressure of 2.07 kPa (about 0.3 psi). This SFC test was carried out at room temperature (25°C ± 2°C). Using a computer and the even balance 49, the amount of liquid passing through the gel layer was recorded every 20 seconds for 10 minutes as a function of time. A flow speed Fs (T) of the liquid passing through (mainly between the particles of) the swollen gel 37 was determined by dividing an increased weight (gram) by an increased time (s) and expressed by g/s. A time the hydrostatic pressure became constant and the flow speed became stable was Ts. Date obtained in 10 minutes from Ts was used for calculating the flow speed. Then, the value of Fs (T = 0), that is, an initial flow speed of the liquid passing through the gel layer was calculated using the flow speed. Fs (T = 0) was extrapolated from a result of a least square method of Fs (T) versus time. Note that the unit of the SFC is ($10^{-7} \cdot cm^3 \cdot s \cdot g^{-1}$).

$$SFC = (Fs \ (t = 0) \times L0) \ / \ (\rho \times A \times \Delta P) = (Fs \ (t = 0) \times L0) \ / \ 139506$$

In this formula, Fs (t = 0) denotes the flow speed shown by g/s, L0 denotes the height of the gel layer shown by cm, $\rho$ denotes the density of a NaCl solution (1.003 $g/cm^3$), A denotes the area of an upper surface of the gel layer in the cell 39 (28.27 $cm^2$), and $\Delta P$ denotes the hydrostatic pressure applied to the gel layer (4,920 $dyne/cm^2$).

Note that the artificial urine used in the SFC test is a mixture of 0.25 gram of calcium chloride dihydrate, 2.0 grams of potassium chloride, 0.50 gram of magnesium chloride hexahydrate, 2.0 grams of sodium sulfate, 0.85 gram of ammonium dihydrogen phosphate, 0.15 gram of diammonium hydrogenphosphate and 994.25 grams of purified water.

[Capillary Suction Index (CSI)]

The CSI is an index showing the capillary suction power of the water-absorbent agent composition (or the water-absorbent agent), and can be calculated as a sum of the respective capillary suction forces (CSF) of the water-absorbent agent composition subjected to respective negative pressure gradients of 0 c'm, 10 cm, 20 cm and 30cm.

The CSF indicates an absorbency of the water-absorbent agent composition subjected to a predetermined pressure gradient for a predetermined time under load of 1.93 kPa (about 0.28 psi). The following will explain a method for measuring the CSF in reference to Figure 2.

One end of a conduit 3 was connected with a lower portion of a glass filter 2 (having a liquid absorbing surface and a diameter of 60 mm) of a porous glass plate 1 (Glass filter particle number #3; Buchner filter produced by Sogo Laboratory Glass Works Co., Ltd., TOP 17G-3 (code no. 1175-03)), and another end of the conduit 3 was connected with an attachment opening formed at a lower portion of the liquid vessel shaving a diameter of 10 cm. An average pore diameter of the porous glass plate 1 was 20 $\mu$m to 30 $\mu$m. Even though the difference between liquid levels was 60 cm, it is possible to keep water in the porous glass plate 1 by its capillary force while counteracting a negative pressure of a water column, and also possible to maintain a state of no introduction of air. A support ring 5 for allowing the glass filter 2 to move up and down was attached to the glass filter 2, a system (the liquid vessel 4, the conduit 3 and the porous glass plate 1) was filled with a 0.90 mass % physiological saline 6, and the liquid vessel 4 was placed on a balance 7. After confirming that no air was in the conduit 3 and the lower portion of the porous glass plate 1, the glass filter 2 was adjusted so that the vertical interval between the liquid level of the 0.90 mass % physiological saltine 6 in the liquid Vessel 4 and the upper surface of the porous glass plate 1 was a predetermined length. Then, the glass filter 2 was fixed to a stand 8.

W (gram) (about 0.90 gram) of a measurement sample 9 (the water-absorbent agent composition or the water-absorbent agent) was uniformly and quickly sprinkled on the glass filter 2 of the porous glass plate 1. Then, a load 10 z kPa (about 0.28 psi)) having a diameter of 59 mm was placed on the measurement sample 9. 60 minutes later, a mass. W5 (gram) of the 0.90 mass % physiological saline absorbed by the measurement sample 9 was, measured.

The CSF of each pressure gradient can be calculated by the following formula.

$$CSF \ (g/g) = W5 \ (gram) \ / \ W \ (gram)$$

In a case where the CSFs of the water-absorbent agent subjected to the negative pressure gradients of 0cm, 10cm, 20cm and 30cm are termed, CSF-0cm, CSF-10cm, CSF-20cm and CSF-30cm, respectively, the CSI can be calculated by the following formula.

$$CSI = (CSF\text{-}0cm) + (CSF\text{-}10cm) + (CSF\text{-}20cm) +$$

$$(CSF\text{-}30cm)$$

[Liquid Distribution Velocity (LDV)]

The LDV can be calculated' from the liquid updrawing speed (WR). The WR was obtained by using an updrawing index measurement apparatus disclosed in Japanese Unexamined Patent Publication No. 5-200068 (Tokukaihei 5-200068 (EP532002)).

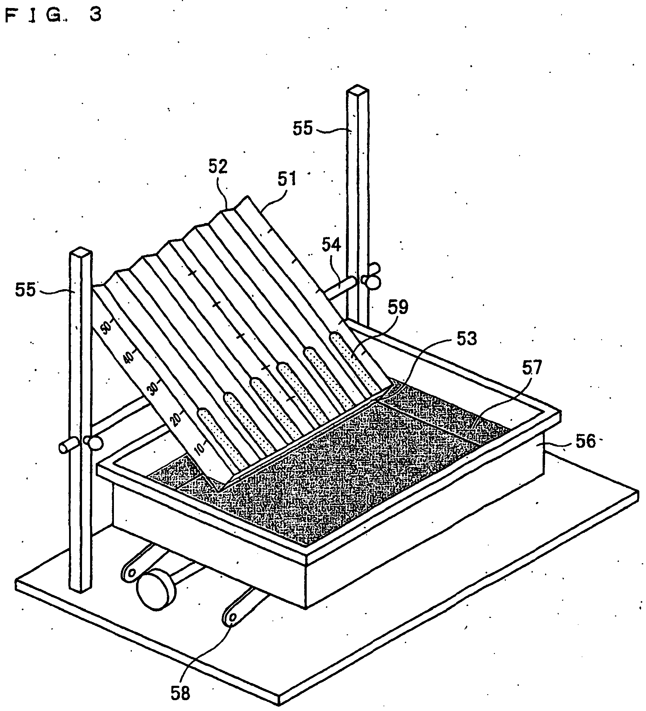

As shown in Figure 3, in the updrawing index measurement apparatus, one end of a trough sheet 51 (made by SUS304 stainless steel (grade 2B finishing)) made of hard metal and having six trough grooves 52 was sealed by a 100 mesh stainless steel screen 53 (having 150,micron openings), and the screen 53 was soldered to the trough sheet 51 so as to hold the water-absorbent agent composition under the test.

Each of the trough grooves 52 has a side angle of 90°C, and has a length of at least 20 cm. The interval between peaks of the trough grooves 52 was 5.5 cm, and the depth of the trough groove 52 was 4 cm. Note that the artificial urine can pass through the screen 53. A crossbar 54 attached to the trough sheet 51 supports the trough sheet 51 by an experimental stand 55 having an appropriate fixation means such as a clamp. A liquid reserving tank 56 has such an adequate size that one end, to which the screen 53 was attached, of the trough sheet 51 can soak in liquid in the liquids reserving tank 56. Moreover, the liquid reserving tank 56 is filled with the artificial urine 57. An experimental jack 58 causes the liquid reserving tank 56 to move up and down, so as to adjust the liquid level of the artificial urine 57.

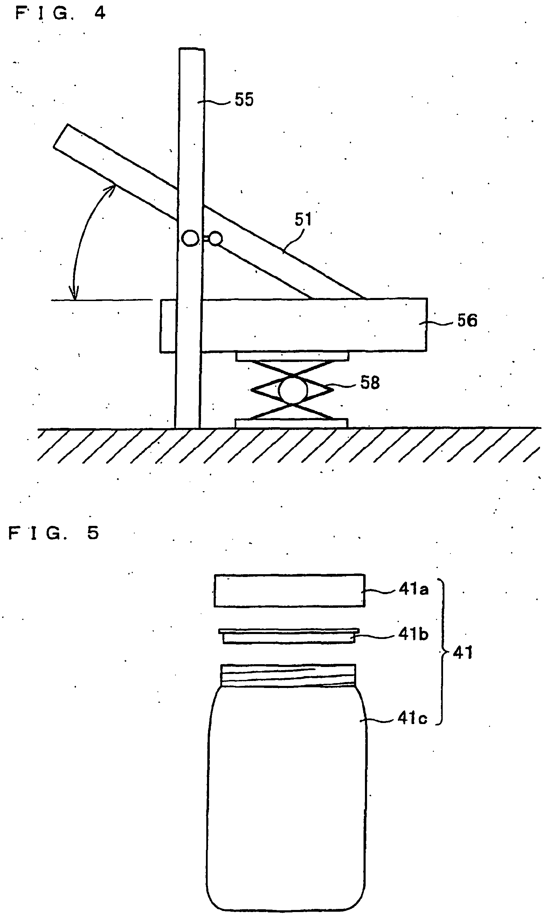

Moreover, as shown in Figure 4, in the updrawing index measurement apparatus, the trough sheet 51 was supported by the experimental stand 55 at an angle of 20° with respect to a horizontal surface.

The following will explain a method for measuring the WR using the updrawing index measurement apparatus.

First, 1.00 gram ± 0.005 gram of a water-absorbent agent composition 59 was sprinkled uniformly between a scale marking 0 cm and a scale marking 20cm of each of the trough grooves 52 of the trough sheet 51 provided at an angle of 20°. Further, the water-absorbent agent composition was sprinkled more uniformly with a spatula.

Used as the artificial urine 57 was a physiological saline prepared by mixing 1 L of a 0.9 mass % colored physiological saline (sodium chloride aqueous solution) with 0.01 gram of food blue No. 1 (Tokyo Chemical Industry Co., Ltd.).

First, the trough sheet 51 was adjusted so that its lowest portion was located 0.5 cm above the liquid surface of the liquid reserving tank 56, and then the measurement of the WR was started at the same time the screen 53 contracted the liquid. The WR is a time (sec) from when the screen 53 contacts the liquid until when the liquid reaches a scale marking 10 cm. Note that the speed of the liquid, in the liquid reserving tank 56, being absorbed from the lowest portion of the trough sheet 51 to a position 0.5 cm above the lowest portion in a vertical direction with respect to the liquid surface was 1.35 mm/s to 1.40 mm/s. The LDV can be calculated by the following formula.

$$LDV \ (mm/s) = 100 \ (mm) \ / \ WR \ (s)$$

[Liquid Distribution Velocity Decreasing Rate (LDV decreasing rate)]

The LDV decreasing rate is an index for measuring the impact resistance of the liquid distribution velocity of the water-absorbent agent composition, and is calculated by the following formula as the decreasing rate from the LDV before an LDV resistance test described below.

$$LDV \ Decreasing \ Rate \ (\%) = \{(LDV \ (mm/s) \ Before \ Test -$$

$$LDV \ (mm/s) \ After \ Test) \ / \ LDV \ (mm/s) \ Before \ Test\} \times 100$$

The LDV after the test may become larger than the LDV before the test depending on the type of the measurement sample. In this case, the decreasing rate is regarded as 0%.

[Liquid Distribution Velocity (LDV) Resistance Test]

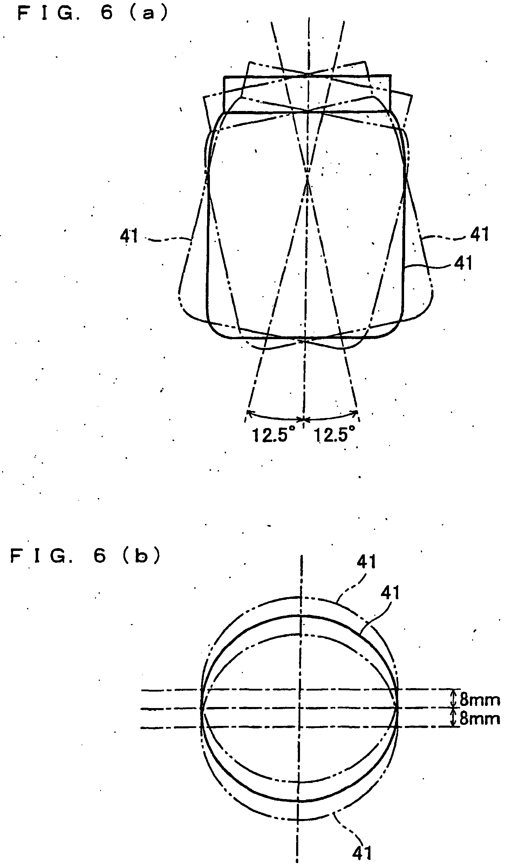

The LDV resistance test is a test of putting the water-absorbent agent composition in a Vessel 41 shown in Figure 5, and elliptically vibrating the vessel 41 under conditions where (i) as shown in Figure 6(a), an angle between a vertical center line of the vessel 41 moved to the left or the right and a plumb line is 12.5°, (ii) as shown in Figure 6 (b), the vessel 41 is caused to move forward and backward in a horizontal direction by 8 mm from a rest position of the vessel 41, and (iii) vibration speed rotation number is 750 c.p.m. The following, will specifically explain a method for this test.

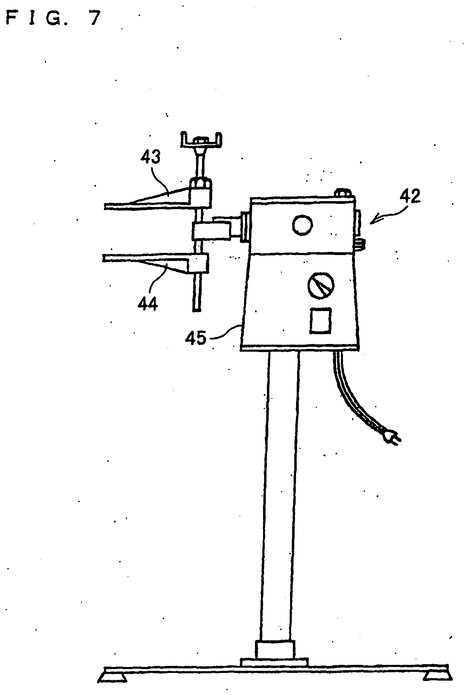

30.0 grams of the water-absorbent agent composition was put into the vessel 41 shown in Figure 5 having a capacity of 225 grams, and the vessel 41 was closed with an inner lid 41b and an outer lid 41a. Then, the vessel 41 was sandwiched by an upper clamp 43 and a lower clamp 44 of a disperser (Toyo Seiki Seisaku-sho, Ltd., No. 488 Test Disperser (Paint Shaker)) 42 shown in Figure 7, so as to be fixed to the disperser 42. The vessel 41 was vibrated under conditions of 100 V, 60 Hz and 750 c.p.m. for 50 minutes. Thus, the vessel 41 attached to the disperser 42 carries out a tilting movement at an angle of 12.5° (total 25°) to the right and left side with respect to an attachment surface 45 to which the upper clamp 43 and the lower clamp 44 were attached, and the same time, the vessel 41 vibrates forward and backward by 8 mm (total 16 mm). This applies the impact force to the water-absorbent agent composition in the vessel 41. Then, after the vibration, the water-absorbent agent composition was taken out of the vessel 41, and the LDV (LDV after the test) was measured.

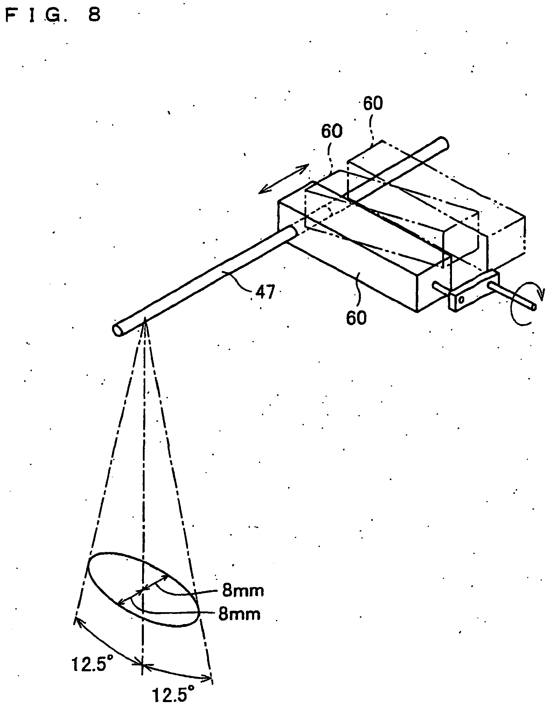

The following will explain a trajectory of the vessel 41 in more detail. As shown in Figure 8, the trajectory of the vessel 41 can be easily confirmed by a trajectory of the plumb line of a bar 47, at an arbitrary position, fixed to clamps 60 (the upper clamp 43, the lower clamp 44) vertically with respect to a direction of gravitational force. Since the bar 477 inclines at 12.5° to the right and left side from a resting state and at the same time moves forward and backward by 8 mm, the plumb line of the bar 47, at an arbitrary position, fixed to the clamps 60 draws an elliptic trajectory shown in Figure 8. That is, the vessel 41 was elliptically vibrated as shown in Figure 8.

[Moisture Content]

The moisture content of the water-absorbent agent composition (or the water-absorbent agent) was obtained in the following manner using drying loss.

W (gram) (about 2.00 grams) of the water-absorbent agent composition was put in an aluminum cup having a bottom surface diameter of 52 mm, and a total mass W6 (gram) of the water-absorbent agent composition (or the water-absorbent agent) and the aluminum cup was measured. Then, the aluminum cup containing the water-absorbent agent composition (or the water-absorbent agent) was dried at ambient temperature of 180°.C for three hours using a ventilation drier. The aluminum cup was taken out of the drier, and placed in a desiccator at room temperature (25°C ± 2°C) for five minutes. In this way, the water-absorbent agent composition (or the water-absorbent agent) was cooled down naturally. Then, a total mass W7 (gram) of the dried water-absorbent agent composition (or the dried water-absorbent agent) and the aluminum cup was measured. The moisture content (mass %) was calculated by the following formula using the W, W6 and W7.

$$\text{Moisture Content (mass \%)} = \{(W6 \text{ (gram)} - W7 \text{ (gram)}) / W \text{ (gram)}\} \times 100$$

[Average gap radius index under no pressure]

An average gap radius index under no pressure (gel gap index under no pressure) was measured with respect to water-absorbent particles or water-absorbent agent composition particles when the particles where saturatedly swollen.

The height of liquid increased in a tube having a radius = R due to the capillary force is expressed as h, and h is found by: $h = 2\gamma\cos\theta/\rho gR$, were $\gamma$ expresses surface tension of liquid, $\theta$ expresses contact angle, g empresses gravity acceleration, and $\rho$ expresses density of liquid (see "TEXTILE SCIENCE AND TECHNOLOGY 13 ABSORBENT TECHNOLOGY 2002" . (ELSEVIER), p428 Formula (35) P.K.Chatterjee. B.S.Gupta).

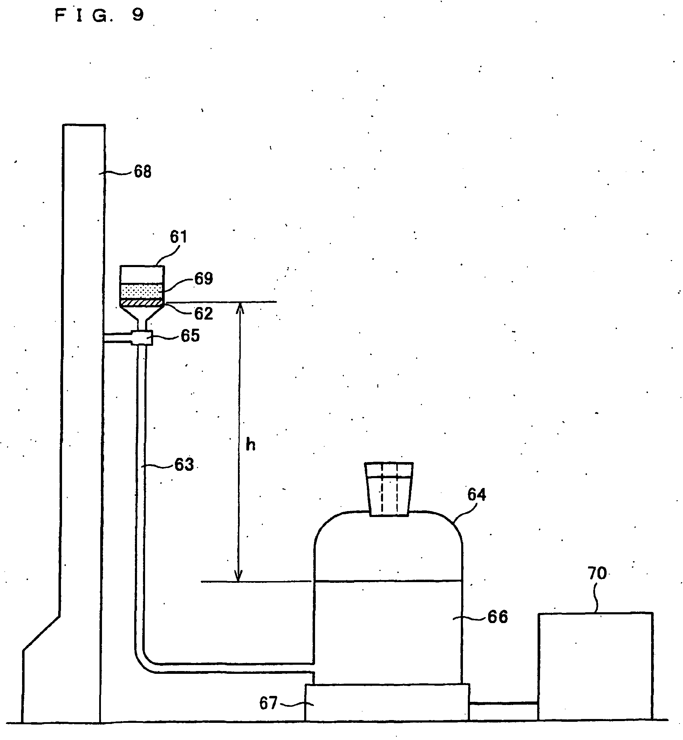

In the device of Figure 9, the difference between the top of the liquid level of the liquid tank and the top of the glass filter 62 of the filter funnel 61 is increased from 0 to h (cm). As a result, the liquid between the swollen gel particles or the liquid in the gaps of the absorber is discharged from a part larger in diameter than the radius (gap: R $\mu$m) of capillary tube. As such, the saturatedly swollen gel in which all the gaps are filled with liquid is increased in height from 0 cm, and the amount of liquid remaining in the gaps is measured at some predetermined heights. The distribution of gap radius (radius of capillary tube) in' the swollen gel is thus found.

Here, the capillary tube radius R of a sample, which is measured at some predetermined heights "h" according to the foregoing formula (h = 2$\gamma$cos$\theta$/$\rho$gR) is defined as a gap radius of the sample. The difference between the height of liquid surface in the liquid tank and the midpoint of the glass filter in the thickness direction is increased stepwise so that the difference sequentially changes to 1cm, 2cm, 5cm,- 10cm, 20cm, cm, and 60cm. As a result, the liquid held in the gap of the corresponding height is discharged. The distribution of the gap radius (capillary tube radius) can be found by measuring the discharge liquid. The measurement results are plotted in a logarithmic probability paper, and the value of D50 is found as an average gap radius. In the present example, $\gamma$ is surface tension (0.0728N/m) of physiological saline (0.9 mass% NaCl solution), $\theta$ is 0°, $\rho$ is density' of physiological saline (1000kg/m$^3$), and g is gravity acceleration at 9.8m/s$^2$, in the formula: h = 2$\gamma$cos$\theta$/$\rho$gR.

According to this, the respective liquids held at the heights of 1cm, 2cm, 5cm, 10cm, 20cm, 30cm and 60cm are found to be held by the gap radiuses (capillary radiuses) of 1485$\mu$m, 743$\mu$m, 297$\mu$m, 149$\mu$m, 74.3$\mu$m, 49.5$\mu$m and 24.8$\mu$m. The contact angle $\theta$ is 0° in this measurement method because this measurement is performed with a sample which sufficiently absorbed the liquid or sufficiently wet. The following specifically explains each process of the measurement.

An end of a conduit 63 was connected to the bottom of the glass filter 62 (60mm in diameter) constituting the liquid absorption surface of the filter funnel (glass filter particle number #3: 20 to 30 $\mu$m in average hole diameter, 60cm in height (h = 60cm), no air supply) 61. The other end of the conduit 63 was connected to the bottom of the liquid tank 64 (10cm in diameter). In the process of connection, exclusion of air from the glass filter 62 was confirmed. The filter funnel 61 was fixed with the clamp 65 so that the liquid absorption surface becomes horizontal At this point, the filter funnel 61 including its bottom and the conduit 63 were both filled with physiological saline. The liquid tank 64 was placed on a balance 67 connected to a computer 70 so that a change in mass of the liquid tank. 64 is recorded into the computer 70. The filter funnel 61 fixed by the clamp 65 was arranged to automatically descend or ascend by an automatic ascensor programmed in advance. The ascending/descending speed of the filter funnel 61 was set to 1.0cm/ sec.

After confirming that there is no bubbles (air) under the glass filter 62 of the filter funnel 61 and in the conduit 63, the liquid surface of the physiological saline 66 in the liquid tank 64 is brought to the same height as that of the midpoint of the glass filter in the thickness direction.

Next, the filter funnel 61 was ascended until the difference between the midpoint of the glass filter 62 in the thickness direction and the point of height 0cm becomes 60cm, and the balance is set to 0 at this point. Note that, hereinafter, the "height of the filter, funnel 61" refers to the difference between the midpoint of the glass filter 62 in the thickness direction and the point of height 0. The point of height 0 is the point where the liquid surface of the physiological saline 66 in the liquid tank 64 comes to the same height as that of the midpoint of the glass filter in the thickness direction.

After the recording by the computes 70 was started, a measurement sample 69 (water-absorbent agent or water-absorbent agent composition) was placed on the glass filter 62. In the case of using particulate measurement samples, about 0.900g (W) of the particles adjusted in 600 $\mu$m to 300 $\mu$m by a sieve wee quickly and evenly dispersed on the glass filter 62. In the case of using other types of measurement sample 69, the sample was cut into a disk 57mm in diameter, and the mass (W) of the dry disk was measured before placing it on the glass filters 62. Note that, a blank test was also performed in the same manner described below with an empty glass filter.

The height of the filter funnel 61 was adjusted to -3cm (so that the glass filter 62 becomes lower than the liquid surface), and the measurement sample 69 was left to be swollen until the change in liquid mass becomes less than 0.002g/min (eg. 30 minutes). At this time, the measurement sample 69 was completely soaked in the physiological saline, and no air-bubbles (air) were contained in the measurement sample 69.

The height of the filter funnel 61 was adjusted back to 0cm, and the glass filter 62 was kept at the same height until the change in liquid mass became less than 0.002g/min (eg. 60 minutes). When the change in liquids mass became less than 0.002g/min, the value of the balance was taken as "A0"..

Similarly, the height of the filter funnel 61 was changed to 1cm, 2cm, 5cm, 10cm, 20cm, 30cm and 60cm, and the respective values of the balance at the time where the change in liquid mass became less than 0.002g/min were taken as "A1", "A2", "A5", "A10", "A20", "A30", and "A60".

In the blank test where the glass filter 62 does not contain the measurement sample 69, the height of the filter funnel 61 was also changed to 0cm, 1cm, 2cm, 5cm, 10cm, 20cm, 30cm and 60cm, and the respective values of the balance at the time where the change in liquid mass became less than 0.002g/min were taken as "B0" "B1", "B2", "B3", "B4", "B5", "B10", "B20", "B30" and "B60".

In this measurement method, a calculation result of (A60-B60) was used as a reference value and the gap water amount at each height was found (an absolute value is used as the value measured by a balance is a negative value) by subtracting the reference value from the liquid mass amount (eg, A30-B30) at each height (0cm, 1cm, 2cm, 5cm, 10cm, 20cm, 30cm and 60cm).

With this gap water amount at each height, the ratio of the total gap water amount was calculated. As described above, the liquids held respectively at 1cm, 2cm, 5cm, 10cm, 20cm, 30cm and 60cm were assumed to be maintained within gap radiuses (capillary tube radiuses of 1485$\mu$m, 743$\mu$m, 297$\mu$m, 149$\mu$m, 74.3$\mu$m, 49.5$\mu$m, and 24.-8$\mu$m. That is, the liquid held at a height of 60cm passes through a gap radius (capillary radius) of 24.8$\mu$m. As such, each ratio of the total gap water amount and the foregoing value of the capillary radius are plotted on a logarithmic probability paper. With this graph, the gap radius (D50) corresponding to 50% of the ratio of the total gap water amount, was found as an "average gap radius index under no pressure" for the sample. Further, a logarithmic standard deviation ($\sigma\zeta$) for the distribution was found according to the ratio of the total gap water amount.

Further, the calculation result was confirmed by finding another "average gap radius index under no pressure" by the method above by using spherical glass beads of 350 to 500 $\mu$m and of 1000 to 1180 $\mu$m. The calculation results were 86$\mu$m and 217$\mu$m, respectively.

[Reference Example 1]

(Reference Example may be referred to as "RE" in Tables)

A reaction liquid was prepared by dissolving 11.3 mass parts of polyethylene glycol diacrylate (the average addition mole number of ethylene oxides is 9) in 5,460 mass parts of a sodium acrylate aqueous solution (monomer concentration of 38 mass %) which was prepared by mixing acrylic acid, a sodium acrylate aqueous solution and deionized water and has a neutralization rate of 75 mole %. Next, this reaction liquid was put in a reactor made by lidding a jacketed stainless twin-arm kneader having two sigma blades and 10 liters in capacity. While, keeping the temperature of the reaction liquid to 25°C, dissolved oxygen was removed from the reaction liquid by nitrogen gas. Then, while stirring the reaction liquid, 30.7 mass parts of a 10 mass % sodium persulfate aqueous solution and 0.7 mass part of a 1 mass % L-ascorbic acid aqueous solution were added to the reaction liquid. About one minute later, polymerization started. 17 minutes after the polymerization started, the polymerization peak temperature was 86°C. 40 minutes after the polymerization started, a hydrated gel polymer was taken out. The hydrated gel polymer were particles each having a diameter of about 1 mm to 4 mm. This hydrated gel polymer was sprinkled on a 50 mesh metal gauze (mesh size 300 $\mu$m), and dried by hot air of 170°C for 45 minutes. Next, the dried polymer was crushed with a roll mill, and classified by metal gauzes of mesh size 710 $\mu$m and mesh size 212 $\mu$m. In this way, a water-absorbent agent (A1) having an irregular pulverized shapes was obtained. The centrifuge retention capacity (CRC) of the water-absorbent agent (A1) was 32 g/g. Tables 1 and 2 show the particle size distribution of the water-absorbent agent (A1).

[Reference Example 2]

A water-absorbent agent (A2) having an irregular pulverized shape was obtained in the same manner as Reference Example 1 except that the dried polymer crushed with the roll mill was classified by metal gauzes of mesh size 600 $\mu$m and mesh size 150 $\mu$m. The centrifuge retention capacity (CRC) of the water-absorbent agent (A2) was 32 g/g. Tables 1 and 2 show the particle size distribution of the water-absorbent agent (A2).

[Reference Example 3]

A water-absorbent agent (A3) having an irregular pulverized shape was obtained in the same manner as Reference Example 1 except that (i) the dried polymer was crushed with the roll mill which was set so that the dried polymer was crushed more coarsely than Reference Example 1, and (ii) the polymer was classified by metal gauzes of mesh size 850 $\mu$m and mesh size 150 $\mu$m. The centrifuge retention capacity (CRC) of the water-absorbent agent (A3) was 32 g/g. Tables 1 and 2 show the particle size distribution of the water-absorbent agent (A3).

[Reference Example 4]

A water-absorbent agent (A4) having an irregular pulverized shape was obtained in the same manner as Reference Example 1 except that the dried polymer was crushed twice with the roll mill, and was classified by metal gauzes of mesh size 600 $\mu$m and mesh size 106 $\mu$m. The centrifuge retention capacity (CRC) of the water-absorbent agent (A4) was 32 g/g. Tables 1 and 2 show the particle size distribution of the water-absorbent agent (A4).

[Reference Example 5]

A water-absorbent agent (A5) having an irregular pulverized shape was obtained in the same manner as Reference Example 1 except that the dried polymer was crushed with the roll mill which was adjusted so that the resulting particles were larger than those of Reference Example 1 but smaller than those of Reference Example 3, and the particles were then classified by metal gauzes of mesh size 850 $\mu$m and mesh size 106 $\mu$m. The centrifuge retention capacity (CRC) of the water-absorbent agent (A5) was 32 g/g. Moreover, Tables 1 and 2 show the particle size distribution of the water-absorbent agent (A5).

[Example 1]

(Example may be referred to as "E" in Tables)

3.65 mass parts of a first surface crosslinking agent aqueous solution prepared by mixing 0.6 mass part of propylene glycol, 0.35 mass part of 1,4-butanediol and 2.7 mass parts of water was sprayed to and mixed with 100 mass parts of the water-absorbent agents (A1) obtained in Reference Example 1. The resulting mixture was subjected to heat treatment using a paddle type mixing/heating device at powder temperature of 195°C for 45 minutes. After that, 1.22 mass parts of a second surface cross-linking agent aqueous solution prepared by mixing, 0.02 mass part of propylene glycol, 0.5 mass part of aluminum sulfate, 0.1 mass part of sodium lactate and 0.6 mass part of water was sprayed to and mixed with the mixture taken out of the mixing/heating device. The resulting mixture was subjected to heating treatment at 60°C for an hour: Thus, a surface-crosslinked water-absorbent agent (B1) was obtained. The particule size distribution of the surface-crosslinked water-absorbent agent (B1) was substantially the same as that of the water-absorbent agent (A1), and the SFC of the surface-crosslinked water-absorbent agent (B1) was 90 (unit:$10^{-7}$cm$^3$·s/g).

Further, 1 mass part of a colloidal silica, LUDOX® HS-30 (produced by Sigma Aldrich Japan) having the following characteristics was added to and mixed with the surface-crosslinked water-absorbent agent (B1). The resulting mixture was subjected to heat treatment at 60°C for an hour. The obtained mixture was caused to pass through a sieve having a mesh size of 710 $\mu$m. In this way, a water-absorbent agent composition (C1) was obtained Physical properties of the water-absorbent agent composition (C1) were measured, and measurement results were shown in Tables 1 to 3.

Physical Properties of LUDOX® HS-30
30 mass % suspension aqueous solution as SiO$_2$
pH = 9.8
Specific surface: about 220 m$^2$/g
Average particle diameter of silica (primary particles of silica): 12 nm

[Example 2]

A water-absorbent agent composition (C2) was obtained in the same manner as Example 1 except that a colloidal silica, LUDOX® CL (produced by Sigma Aldrich Japan) having the following characteristics was used instead of the colloidal silica, LUDOX® HS-30. Physical properties of the water-absorbent agent composition (C2) were measured, and measurement results were shown in Tables 1 to 3.

Physical Properties of LUDOX® CL
30 mass % suspension aqueous solution as mixture of SiO$_2$ + Al$_2$O$_3$
pH = 4.5
Specific surface: about 230 m$^2$ / g
Average particle diameter of silica (primary particles of silica): 12 nm

[Example 3]

3.65 mass parts of the first surface crosslinking agent aqueous solution prepared by mixing 0.6 mass part of propylene glycol, 0.35 mass part of 1,4-butanediol and 2.7 mass parts of water was sprayed to and mixed with 100 mass parts of the water-absorbent agent (A2) obtained in Reference Example 2. The resulting mixture was subjected to heat treatment using the paddle type mixing/heating device at powder, temperature of 195°C for 45 minutes. After that, 1.22 mass parts of the second surface crosslinking agent aqueous solution prepared by mixing 0.02 mass part of propylene glycol, 0.5 mass part of aluminum sulfate, 0.1 mass part of sodium lactate and 0.6 mass part of water was sprayed to and mixed with the mixture taken out of the mixing/heating device. The resulting mixture was subjected to heating treatment at 60°C for an hour. Thus, a surface-crosslinked water-absorbent agent (B3) was obtained. The particle size distribution of the surface-crosslinked water-absorbent agent (B3) was substantially the same as that of the water-absorbent agent (A2), and the SFC of the surface-crosslinked water-absorbent agent (B3) was 96 (unit:$10^{-7}$cm$^3$·s/g).

Further, 1 mass part of a colloidal silica, LUDOX® HS-30 (produced by Sigma Aldrich Japan) was added to and mixed with the surface-crosslinked water-absorbent agent (B3). The resulting mixture was subjected to heat treatment at 60°C for an hour. The obtained mixture was caused to pass through a sieve having a mesh size of 710 $\mu$m. In this way, a water-absorbent agent composition (C3) was obtained. Physical properties of the water-absorbent agent composition (C3) were measured, and measurement results were shown in Tables 1 to 3.

[Example 4.]

A water-absorbent agent composition, (C4) was obtained in the same manner as Example 3 except that 2 mass parts of the colloidal silica was used instead of 1 mass part of the colloidal silica. Physical properties of the waver-absorbent agent composition (C4) were measured, and measurement results were shown in Tables 1 to 3.

[Comparative Example 1]

(Comparative Examples may be referred to as "CE" in Tables)

0.3 mass part of Aerosil® 200 (produced by Nippon Aerosil Co., Ltd.) having the following characteristics was dry blended with the surface-crosslinked water-absorbent agent (B1) obtained in Example 1. The obtained mixture was caused to pass through a sieve having a mesh size of 710 $\mu$m. Thus, a comparative water-absorbent agent composition (C5) was obtained. Physical properties of the comparative water-absorbent agent composition (C5) were measured, and measurement results were shown in Tables 1 to 3.

Physical Properties of Aerosil® 200
Specific surface: about 200 m$^2$/g
Average particle diameter of primary particles of silica: 12 nm
Note that an average particle diameter of aggregates was 37 $\mu$m (wet-measured with Particle Size Distribution Analyzer (LA-920 produced by Horiba, Ltd.) by dispersing aggregates in purified water).

[Comparative Example 2]

0.3 mass part of Aerosil® 200 (produced by Nippon Aerosil Co., Ltd.) was dry blended with the surface-crosslinked water-absorbent agent (B3) obtained in Example 3. The obtained mixture was caused to pass through a sieve having a mesh size of 710 $\mu$m. In this way, a comparative water-absorbent agent compositions (C6) was obtained. Physical properties of the comparative water-absorbent agent composition (C6) were measured, and measurement results were shown in Tables 1 to 3.

[Comparative Example 3]

3.65 mass parts of the first surface crosslinking agent aqueous solution prepared by mixing 0.6 mass part of propylene glycol, 0.35 mass part of 1,4-butanediol and 2.7 mass parts of water were sprayed to and mixed with 100 mass parts of the water-absorbent agent (A3) obtained in Reference Example 3. The resulting mixture was subjected to heat treatment using the paddle type mixing/heating device at powder temperature of 195°C for 45 minutes. After that, 1.22 mass parts of the second surface crosslinking agent aqueous solution prepared by mixing 0.02 mass part of propylene glycol, 0.5 mass part of aluminum sulfate, 0.1 mass part of sodium lactate and 0.6 mass part of water was sprayed to and mixed with the mixture taken out of the mixing/heating device. The resulting mixture was subjected to heat treatment at 60°C for an hours Thus, a surface-crosslinked water-absorbent agent (B7) was obtained. The particle size distribution of the surface-crosslinked water-absorbent agent (B7) was substantially the same as that of the water-absorbent agent (A3), and the SFC of the surface-crosslinked water-absorbent agent (B7) was 85 (unit: $10^{-7}$cm$^3$·s/g).
Further, 1 mass part of the colloidal silica, LUDOX® HS-30 (produced by Sigma Aldrich Japan) was added to and mixed with the surface-crosslinked water-absorbent agent (B7). The resulting mixture was subjected to heat treatment at 60°C for an hour. The obtained mixture was caused to pass through a sieve having a mesh size of 850 $\mu$m. In this way, a comparative water-absorbent agent composition (C7) was obtained. Physical properties of the comparative water-absorbent agent composition (C7) were measured, and measurement results were shown in Tables 1 to 3.

[Comparative Example 4]

77 mass parts of sodium acrylate, 22.8 mass parts of acrylic acid, 0.2 mass part of N,N'-methylenebisacrylamide, 395 mass parts of deionized water and 0.001 mass part of dichlorotris (triphenylphosphine) ruthenium were put in a glass reaction vessel of 1 L in capacity. This reaction liquid in the glass reaction Vessel had the monomer concentration of 20 mass % and the neutralization rate of 72 mole %. While stirring and mixing, the reaction liquid was kept at 3°C, and nitrogen was caused to flow in the reaction liquid to remove dissolved oxygen. Thus, the oxygen concentration of the reaction liquid was set to 1 ppm or less. Next, 1 mass part of 1% aqueous hydrogen peroxide, 1.2 mass parts of a 0.2% L-ascorbic acid aqueous solution and 2.8 mass parts of a 2% 2,2'-azobis amidinopropane dihydrochloride aqueous solution were added and mixed to initiate polymerization. 10 minutes after the polymerization started, the polymerization peak temperature was 45°C. About 5 hours after the polymerization started, the hydrated gel polymer was taken out. The hydrated gel polymer was uniformly mixed for one minute with the twin-arm kneader. This hydrated gel polymer was sprinkled on a 50 mesh metal gauze (mesh size 300 $\mu$m), and dried for 30 minutes with a through-air drier which realizes a wind speed of 2.0 m/s and a temperature of 150°C. The dried polymer was crushed in the same manner as Reference Example 3, and classified by metal gauzes of mesh size 850 $\mu$m and mesh size 150 $\mu$m (20 mesh to 100 mesh) for adjusting the particle size.

Text, 3 mass parts of a colloidal silica, LUDOX® CL, which is a colloid aqueous solution of amorphous silicon oxide in a non-porous spherical shape and is used in Example 2, was added to the dried polymer, and mixed uniformly for five minutes with the twin-arm kneader. Then, the particle size of the resulting polymer was adjusted with metal gauzes of mesh size 850 $\mu$m and mesh size 150 $\mu$m (20 mesh to 100 mesh). Thus, a comparative water-absorbent agent composition (C8) was obtained Physical properties of the comparative water-absorbent agent composition (C8) were measured, and measurement results were shown in Tables 1 to 3.

[Comparative Example 5]

81.7 mass parts of acrylic acid, 0.4 mass part of pentaerythritol triallyl ether, 241 mass parts of deionized water and 0.001 mass part of dichlorotris (triphenylphosphine) ruthenium were put in the glass reaction vessel of 1 L in capacity. This reaction liquid in the glass reaction vessel had the monomer concentration of 25 mass % and the neutralization rate of 0 mole %. While stirring and mixing, the reaction liquid was kept at 3°C, and nitrogen was caused to flow in the reaction liquid to remove dissolved oxygen. Thus, the oxygen concentration of the reaction liquid was set to 1 ppm or less. Next, 0.3 mass part of 1% aqueous hydrogen peroxide, 0.8 mass part of' a 0.2% L-ascorbic acid aqueous solution and 0.8 mass part of a 2% 2,2'-azobis amidinopropane dihydrochloride aqueous solution were added and mixed to initiate polymerization. After the polymerization started, the polymerization temperature was kept at 80°C $\pm$ 5°C by controlling a bath temperature. About 5 hours later, the hydrated gel polymer was taken out. While finely cutting the obtained hydrated gel polymer) with the twin-arm kneader, 109.1 mass parts of a 30 mass % podium hydroxide aqueous solution was added and the mixture was kneaded for 30 minutes. Thus, the hydrated gel polymer in which 72 mole % of carboxyl group was neutralized was obtained. The hydrated gel polymer was sprinkled on a 50 mesh metal gauze (mesh size 300 $\mu$m), and dried for 30 minutes with the through-air drier which realizes a wind speed of 2.0 m/s and a temperature of 140°C. The dried polymer was crushed in the same manner as Reference Example 2, and classified by metal gauzes of mesh size 590 $\mu$m and mesh size 250 $\mu$m (30 mesh to 60 mesh) for adjusting the particle size. Thus, a water-absorbent agent (A9) was obtained.

While stirring the water-absorbent agent (A9) at high speed (Lödige mixer, 330 rpm), 2 mass parts of a surface crosslinking agent aqueous solution (a water/methanol mixed solution of 10% ethylene glycol diglycidyl ether (mass ratio of water : methanol = 70 : 30)) prepared by mixing 0.2 mass part of ethylene glycol diglycidyl ether, 1.26 mass parts of water and 0.54 mass part of methanol was sprayed into 100 mass parts of the water-absorbent agent (A9) and mixed with the agent (A9). Then, the resulting mixture was' placed in a heating furnace set at 140°C for 30 minutes, so as to be crosslinked by heat. Thus, a surfaces crosslinked water-absorbent agent (B9) was obtained. The SFC of the surface crosslinked water-absorbent agent (B9) was 0.

Further, 1 mass part of the colloidal silica, LUDOX® HS-30, which is a colloid aqueous solution, of amorphous silicon oxide in a non-porous spherical shape and is used in Example. 3, was added to the surface crosslinked water-absorbent agent (B9). Thugs, a comparative water-absorbent agent composition (C9) was obtained. Physical properties of the comparative water-absorbent agent composition (C9) were measured, and measurement results were shown in Tables 1 to 3.

[Comparative Example 6]

81.8 mass parts of acrylic acid, 0.3 mass part of N,N'-methylenebisacrylamide and 241 mass parts of deionized water were put in the glass reaction vessel of 1 L in capacity. This reaction liquid in the, glass reaction vessel had the monomer concentration of 25 mass % and the neutralization rate of 72 mole %. While stirring and mixing, the reaction liquid was kept at 2°C, and nitrogen was caused to flow in the reaction liquid for 30 minutes to remove dissolved oxygen. Next, 1 mass part of 1% aqueous hydrogen peroxide, 1.2 mass parts of a 0.2% L-ascorbic acid aqueous solution and 2.8 mass parts of a 2% 2,2'-zobis amidinopropane dihydrochloride aqueous solution were added and mixed to initiate polymerization. After the polymerization started, the polymerization, temperature was kept at 70°C to 80°C by controlling a bath temperature. About 8 hours later, the hydrated gel polymer was taken out. While finely cutting the obtained hydrated gel polymer with the twin-arm kneader, 72.7 mass parts of a 45 mass % sodium hydroxide aqueous solution was added and the mixture was kneaded for 30 minutes. Thus, the hydrated gel polymer in which 72 mole % of carboxyl group was neutralized was obtained. The hydrated gel polymer was sprinkled on a 50 mesh metal gauze (mesh size 300 $\mu$m), and dried for 30 minutes with the through-air drier which realizes a wind speed of 2.0 m/s and a temperature of 150°C. The dried polymer was crushed in the same manner as Reference Example 3, and classified by metal gauzes of mesh size 710 $\mu$m and mesh size 150 $\mu$m for adjusting the particle size. Thus, a water-absorbent agent (A10) was obtained.

While keeping 100 mass parts of the water-absorbent agent (A10) at 50°C and stirring it with the twin-arm kneader at high speed, 9.5 mass parts of a surface crosslinking agent aqueous solution (mass ratio of ethylene glycol diglycidyl ether : water : methanol = 2 : 70 : 30) prepared by mixing 0.19 mass part of ethylene glycol diglycidyl ether, 2.79 mass parts of water and 6.52 mass parts of methanol was dripped onto the water-absorbent agent (A10). Then, the resulting mixture was continuously mixed at 50°C for 15 minutes. Further, the mixture was placed in the heating furnace set at 140°C for 40 minutes, so as to be crosslinked by heat. Thus, a surface crosslinked water-absorbent agent (B10) was obtained. The SFC of the obtained surface crosslinked water-absorbent agent (B10) was 6 (unit:$10^{-7}$cm$^3$·s/g).

Further, while stirring the surface crosslinked water-absorbent agent (B10) with the twin-arm kneader at high speed, 4.0 mass parts of a mixed solution prepared by mixing (i) 1.0 mass part of the colloidal silica, LUDOX® HS-30 which is a colloid aqueous solution of amorphous silicon oxide in a non-porous spherical shape and is used in Example 3, and (ii) 3.0 mass parts of methanol was dropped on the surface crosslinked water-absorbent agent (B10). Then, the mixture was dried in the heating furnace set at 100°C for 30 minutes; and granulated. The mixture was classified by a metal gauze of mesh size 710 $\mu$m to remove the generated coarse particles. Thus, a comparative water-absorbent agent composition (C10) was obtained. Physical properties of the comparative water-absorbent agent composition (C10) were measured, and measurement results were shown in Tables 1 to 3.

[Examples 5]

A water-absorbent agent composition (C11) was obtained in the same manner as Examples 1 except that 1.5 mass parts of a colloidal silica (Snowtex® 20, produced by Nissan Chemical Industries, Ltd.) having the following characteristics was added to and mixed with 100 mass parts of the surface-crosslinked.water-absorbent agent (B1) instead of the colloidal silica, LUDOX® HS-30. Physical properties of the water-absorbent agent composition (C11) were measured, and measurement results were shown in Tables 4. to 6.

Physical properties of Snowtex® 20
20 mass % suspension aqueous solution as SiO$_2$
pH = 9.5 to 10.0
Particle diameter of silica: 10 nm to 20 nm

[Example 6]

A water-absorbent agent composition (C 12) was obtained in the same manner as Example 1 except that 1.5 mass parts of a colloidal silica (Snowtex® 20L (produced by Nissan Chemical Industries, Ltd.) having the following characteristics was added to and mixed' with 100 mass parts of the surface-crosslinked water-absorbent agent (B1) instead of the colloidal silica, LUDOX® HS-30. Physical properties of the water-absorbent agent composition (C12) were measured, and measurement results were shown in Tables 4 to 6.

Physical properties of Snowtex® 20L
20 mass % suspension aqueous solution as SiO$_2$
pH = 9.5 to 10.0
Particle diameter of silica: 40 to 50nm

[Example 7]

A water-absorbent agent composition (C13) was obtained in the same manner as Example 1 except that 1.25 mass parts of a colloidal silica (Snowtex® ZL (produced by Nissan Chemical Industries, Ltd.) having the following characteristics was added to and mixed with 100 mass parts of the surface-crosslinked water-absorbent agent (B1) instead of the colloidal silica; LUDOX® HS-30. Physical, properties of the water-absorbent agent composition (C13) were measured, and measurement results were shown in Tables 4 to 6.

Physical properties of Snowtex® ZL
40 mass % suspension aqueous solution as $SiO_2$
pH = 9.5 to 10.0
Particle diameter of silica: 70 nm to 100 nm

[Example 8]

A water-absorbent agent composition (C 14) was obtained in the same manner as Example 1 except that 2.5 mass parts of a colloidal alumina (boehmite plate crystal) (Aluminasol 520, produced by Nissan Chemical Industries, Ltd., (Stabilizer: Nitric acid)) having the following characteristics was added to and mixed witch 100 mass parts of the surface-crosslinked water-absorbent agent (B1) instead of the colloidal silica, LUDOX® HS-30. Physical properties of the water-absorbent agent composition (C14) were measured, and measurement results were shown in Tables 4 to 6.

Physical properties of Aluminasol 520
20 mass % suspension aqueous solution as $Al_2O_3$
$NO_3$: 1% or less
Viscosity: 1.0 mPa·s to 25.0 mPa·s
Particle charge: cation

[Example 9]

A water-absorbent agent composition (C15) was obtained in the same manner as Example 1 excerpt that 5.0 mass parts of a feathered colloidal alumina (Aluminasol 200, produced by Nissan Chemical Industries, Ltd., (Stabilizer: Acetic acid)) having the following characteristics was added to and mixed with 100 mass parts of the surface-crosslinked water-absorbent agent (B1) instead of the colloidal silica, LUDOX® HS-30. Physical properties of the water-absorbent agent composition (C15) were measured, and measurement results were shown in Tables 4 to 6.

Physical properties of Aluminasol 200
10 mass % suspension aqueous solution as $Al_2O_3$
$CH_3COOH$: 3.5% or less
Viscosity: 50 mPa·s to 3,000 mPa·s
Particle charge: cation

[Example 10]

A water-absorbent agent composition (C16) was obtained in the same manner as Example 3 except that 2.5. mass parts of a colloidal silica (Snowtex® O, produced by Nissan Chemical Industries Ltd.) having the following characteristics was added to and mixed with 100 mass parts of the surface-crosslinked water-absorbent agent (B3) instead of the colloidal silica, LUDOX® HS-30. Physical properties of the water-absorbent agent composition (C 16) were measured, and Measurement results were shown in Tables 4 to 6.

Physical properties of Snowtex® O
20 mass % suspension aqueous solution as $SiO_2$
pH = 2.0 to 4.0
Particle diameter of silica: 10 nm to 20 nm

[Example 11]

A water-absorbent agent composition (C17) was obtained in the same manner as Example 3 except that 1.0 mass part of a colloidal silica (Snowtex® S, produced by Nissan Chemical Industries, Ltd.) was added to and mixed with 100 mass parts of the surface-crosslinked water-absorbent agent (B3) instead of the colloidal silica, LUDOX® HS-30. Physical properties of the water-absorbent agent composition (C17) were measured, and measurement results were shown in Tables 4 to 6.

Physical properties of Snowtex® S
30 mass % suspension aqueous solution as $SiO_2$
pH = 9.5 to 10.5
Particle diameter of silica: 8 nm to 11 nm

[Example 12]

3.95 mass parts of the first surface crosslinking agent aqueous solution prepared by mixing 0.6 mass part of propylene glycol, 0.35 mass part of 1 ,4-butanediol and 3.0 mass parts of water was sprayed to and mixed with 100 mass parts of the water-absorbent agent (A4) obtained in Reference Example 4. The resulting mixture was subjected to heat treatment using a hot-air drier temperature of 180°C for 60 minutes. After that, 1.22 mass parts of the second surface cross-linking agent aqueous solution prepared by mixing 0.02 mass part of propylene glycol, 0.5 mass part of aluminum sulfate, 0.1 mass part of sodium lactate and 0.6 mass part of water was sprayed to and mixed with the mixture taken out of the hot-air drier. The resulting mixture was subjected to heating treatment at 60°C for an hour using a hot-air drier. Thus, a surface-crosslinked water-absorbent agent (B18) was obtained. The particle size distribution of the surface-crosslinked water-absorbent agent (B18) was substantially the same as that of the water-absorbent agent (A4), and the SFC of the surface-crosslinked water-absorbent agent (B18) was 80 (unit:$10^{-7}cm^3 \cdot s/g$).

Further, 1 mass part of the above-specified colloidal silica, LUDOX® HS-30 (produced by Sigma Aldrich Japan) was added to and mixed with the surface-crosslinked water-absorbent agent (B18). The resulting mixture was subjected to heat treatment at 60°C for an hour. The obtained mixture was cased to pass through a sieve having a mesh size of 600 μm. In this way, a water-absorbent agent composition (C18) was obtained. Physical properties of the water-absorbent agent composition. (C 18) were measured, and measurement results were shown in Tables 4 to 6.

[Example 13]

A water-absorbent agent composition (C19) was obtained in the same manner as Example 12 except that 0.75 mass parts of the titanium oxide slurry STS-21® (ISHIHARA SANGYO Co. Ltd.) specified below was used instead of the above-specified colloidal silica, LUDOX® HS-30. Physical properties of the water-absorbent agent composition (C19) were measured, and measurement results were shown in Tables 4 to 6.

Physical properties of titanium oxide slurry STS-21®
$TiO_2$ 40 mass % slurry solution
pH = 8.5

[Example 14]

A water-absorbent agent composition (C20) was obtained in the same manner as Example 12 except that 3.0 mass parts of the Zirconia Sol ZSL-IOT® (DAIICHI KIGENSO KAGAKU KOGYO Co. Ltd.) specified below was used instead or the above-specified colloidal silica, LUDOX® HS-30. Physical properties of the water-absorbent agent composition. (C20) were measured, and measurement results were shown in Tables 4 to 6.

Physical properties of Zirconia Sol ZSL-10T®
$ZrO_2$ 10.0 - 10.5 mass % slurry solution
pH = 2 to 3
Average particle diameter = 10nm

[Example 15]

A water-absorbent agent composition (C21) was obtained in the same manner as Example 12 except that 2.0 mass parts of the Ceria Sol CESL-15N® (DAIICHI KIGENSO KAGAKU KOGYO Co. Ltd.) specified below was used instead of the above-specified colloidal silica, LUDOX® HS-30. Physical properties of the water-absorbent agent composition (C21) were measured, and measurement results were shown in Tables 4 to 6.

Physical properties of Ceria Sol CESL-15N®
$CeO_2$ 15.0 - 15.5 mass % slurry solution
pH = 2.5 to 3
Average particle diameter = 10nm

[Example 16]

A water-absorbent agent composition (C22) was obtained in the same manner as Example 12 except that 3.0 mass parts of the Tin Oxide Sol ($SnO_2$ sol) (DAIICHI KIGENSO KAGAKU KOGYO Co.Ltd.) specified below was used instead of the above-specified colloidal silica, LUDOX® HS-30. Physical, properties of the water-absorbent agent composition (C22) were measured, and measurement results were shown in Tables 4 to 6.

Physical properties of Tin Oxide Sol
$SnO_2$ 9 to 11 mass % slurry solution
pH 9 to 11
Average particle diameter = 5 to 10nm

[Example 17]

3.95 mass parts of the first surface crosslinking agent aqueous solution prepared by mixing 0.6 mass part of propylene glycol, 0.35 mass part of 1 ,4-butanediol and 3.0 mass parts of water was sprayed to and mixed with 100 mass parts of the water-absorbent agent (A5) obtained in Reference Example 5. The resulting mixture was subjected to heat treatment using a hot-air drier temperature of 180°C for 60 minutes. The particle size distribution of the surface-crosslinked water-absorbent agent (B23) was substantially the same as that of the water-absorbent agent (A5), and the SFC of the surface-crosslinked water-absorbent agent (B23) was 35 (unit:$10^{-7}cm^3 \cdot s/g$).
Further, 1 mass part of the above-specified colloidal silica, LUDOX® HS-30 (produced by Sigma Aldrich Japan) was added to and mixed with the surface-crosslinked water-absorbent agent (B23). The resulting mixture was subjected to heat treatment art 60°C for an hour. The obtained mixture was caused to pass through a sieve having a mesh size of 850 $\mu$m. In this way, a water-absorbent agent composition (C23) was obtained. Physical properties of the water-absorbent agent composition (C23) were measured, and measurement results were shown in Tables 4 to 6.

[Example 18]

3.95 mass parts of the first surface crosslinking agent aqueous solution prepared by mixing 0.6 mass part of propylene glycol, 0.35 mass part of 1 ,4-butanediol and 3.0 mass parts of water was sprayed to and mixed with 100 mass parts of the water-absorbent agent (A5) obtained in Reference Example 5. The resulting mixture was subjected to heat treatment using a hot-air drier temperature of 180°C for 60 minutes. After that, 1.22 mass parts of the second surface crosslinking agent aqueous solution prepared by mixing 0.02 mass part of propylene glycol, 0.5 mass part of aluminum sulfate, 0.1 mass part of sodium lactate and 0.6 mass part of water was sprayed to and mixed with the mixture taken out of the hot-air drier. The resulting mixture was subjected to heating treatment at 60°C for an hour using a hot-air drier. Thus, a surface-crosslinked water-absorbent agent (B24) was obtained. The particle size distribution of the surface-crosslinked water-absorbent agent (B24) was substantially the same as that of the water-absorbent agent (A5), and the SFC of the surface-crosslinked water-absorbent agent (B24) was 49 (unit:$10^{-7}cm^3 \cdot s/g$).
Further, 1 mass part of the above-specified colloidal silica, LUDOX® HS-30 (produced by Sigma Aldrich Japan) was added to an mixed with the surface-crosslinked water-absorbent agent (B24). The resulting mixture was subjected to heat treatment at 60°C for an hour. The obtained mixture was caused to pass through a sieve having a mesh size of 850 $\mu$m. In this way, a water-'absorbent agent composition (C24) was obtained. Physical, properties of the water-absorbent agent composition (C24) were measured, and measurement results were shown in Tables 4 to 6.

[Comparative Example 7]

A water-absorbent agent composition (C25) was obtained in the same manner as Example 12 except that 0.3 mass parts of the above-specified Aerosil® 200 (produced by Nippon Aerosil Co., Ltd.) was used instead of the above-specified colloidal silica, LUDOX® HS-30. Physical properties of the comparative water-absorbent agent composition (C25) were measured, and measurement results were shown in Tables 4 to 6.

[Comparative Example 8]

A water-absorbent agent composition (C26) was obtained in the same manner as Example 17 except that 0.3 mass parts of the above-specified Aerosil® 200 (produced by Nippon Aerosil Co., Ltd.) was used instead of the above-specified colloidal silica, LUDOX® HS-30. Physical properties of the comparative water-absorbent agent composition (C26) were measured, and measurement results were shown in Tables 4 to 6.

[Comparative Example 9]

A water-absorbent agent composition (C27) was obtained in the same manner as Example 18 except that 0.3 mass parts of the above-specified Aerosil® 200 (produced by Nippon Aerosil Co., Ltd.) was used instead of the above-specified colloidal silica, LUDOX® HS-30. Physical properties of the comparative water-absorbent agent composition (C27) were measured, and measurement results were shown in Tables 4 to 6.

Table 1

| | Water-absorbent Agent Composition or Water-absorbent Agent | Particle Size Distribution (mass %) | | | | | | | |
|---|---|---|---|---|---|---|---|---|---|
| | | 850 μm or more | 710 μm or more but less than 850 μm | 600 μm or more but less than 710 μm | 500 μm or more but less than 600 μm | 300 μm or more but less than 500 μm | 150 μm or more but less than 300 μm | 45 μm or more but less than 150 μm | Less than 45 μm |
| RE 1 | A1 | 0.0 | 0.3 | 6.3 | 17.7 | 54.4 | 20.8 | 0.5 | 0.0 |
| RE 2 | A2 | 0.0 | 0.0 | 1.3 | 9.9 | 56.0 | 30.7 | 2.1 | 0.1 |
| RE 3 | A3 | 0.0 | 4.5 | 27.6 | 21.3 | 43.6 | 3.0 | 0.0 | 0.0 |
| RE 4 | A4 | 0.0 | 0.0 | 0.0 | 3.0 | 54.8 | 39.6 | 2.5 | 0.0 |
| RE 5 | A5 | 0.0 | 2.5 | 25.5 | 18.4 | 36.6 | 15.0 | 2.0 | 0.0 |
| E 1 | C1 | 0.0 | 0.6 | 6.5 | 23.1 | 51.5 | 17.6 | 0.7 | 0.0 |
| E 2 | C2 | 0.0 | 0.5 | 5.9 | 22.5 | 52.0 | 18.5 | 0.6 | 0.0 |
| E 3 | C3 | 0.0 | 0.0 | 4.3 | 12.5 | 62.1 | 21.1 | 0.0 | 0.0 |
| E 4 | C4 | 0.0 | 0.0 | 3.7 | 13.8 | 62.5 | 20.0 | 0.0 | 0.0 |
| CE 1 | C5 | 0.0 | 1.1 | 7.2 | 21.7 | 52.6 | 16.0 | 1.4 | 0.0 |
| CE 2 | C6 | 0.0 | 0.0 | 1.4 | 7.6 | 61.6 | 28.6 | 0.7 | 0.0 |
| CE 3 | C7 | 0.0 | 5.3 | 15.3 | 33.2 | 30.3 | 15.4 | 0.5 | 0.0 |
| CE 4 | C8 | 0.0 | 8.6 | 18.4 | 35.7 | 26.9 | 10.4 | 0.0 | 0.0 |
| CE 5 | C9 | 0.0 | 0.0 | 1.5 | 15.8 | 58.5 | 22.2 | 2.0 | 0.0 |
| CE 6 | C10 | 0.0 | 0.0 | 16.2 | 35.2 | 32.2 | 16.4 | 0.0 | 0.0 |

Table 2

| | Water-absorbent Agent Composition or Water-absorbent Agent | D50 (μm) | σζ | Percentage of particles less than 150 μm in diameter (%) |
|---|---|---|---|---|
| Reference Example 1 | A1 | 394 | 0.33 | 0.5 |
| Reference Example 2 | A2 | 344 | 0.34 | 2.1 |
| Reference Example 3 | A3 | 514 | 0.26 | 0.0 |

(continued)

| | Water-absorbent Agent Composition or Water-absorbent Agent | D50 (μm) | σζ | Percentage of particles less than 150 μm in diameter (%) |
|---|---|---|---|---|
| Reference Example 4 | A4 | 315 | 0.31 | 2.0 |
| Reference Example 5 | A5 | 478 | 0.39 | 2.5 |
| Example 1 | C1 | 415 | 0.32 | 0.7 |
| Example 2 | C2 | 410 | 0.32 | 0.6 |
| Example 3 | C3 | 378 | 0.26 | 0.0 |
| Example 4 | C4 | 382 | 0.26 | 0.0 |
| Comparative Example 1 | C5 | 416 | 0.32 | 1.4 |
| Comparative Example 2. | C6 | 348 | 0.29 | 0.7 |
| Comparative Example 3 | C7 | 510 | 0.37 | 0.5 |
| Comparative Example 4 | C8 | 533 | 0.32 | 0.0 |
| Comparative Example 5 | C9 | 373 | 0.34 | 2.0 |
| Comparative Example 6 | C10 | 503 | 0.35 | 0.0 |

Table 3

| | Water-absorbent Agent Composition | LDV (mm/s) Before Test | LDV (mm/s) After, Test | LDV Decreasing Rate (%) | SFC (*1) | CSI | AAP (g/g) | Average gap radius index under no pressure (μm) | σζ of Average of gap radius index under no pressure | MC (%) | CRC (g/g) |
|---|---|---|---|---|---|---|---|---|---|---|---|
| E 1 | C1 | 2.16 | 2.08 | 3.7 | 89 | 89 | 23 | 200 | 1.2 | 3.4 | 28 |
| E 2 | C2 | 2.26 | 2.1 | 7.1 | 90 | 90 | 23 | | | 3.5 | 28 |
| E 3 | C3 | 1.05 | 1.38 | 0 | 98 | 98 | 24 | | | 2.9 | 27 |
| E 4 | C4 | 1.38 | 1.91 | 0 | 98 | 98 | 24 | | | 3.6 | 27 |
| CE 1 | C5 | 2.89 | 1.59 | 45 | 78 | 78 | 21 | 316 | 0.87 | 2.3 | 28 |
| CE 2 | C6 | 1.6 | 0.98 | 38.8 | 89 | 89 | 21 | | | 2.2 | 27 |
| CE 3 | C7 | 0.84 | 0.94 | 0 | 83 | 83 | 23 | | | 2 | 28 |
| CE 4 | C8 | 1.23 | 1.1 | 8.1 | 0 | 72 | 12 | | | 8.7 | 38 |
| CE 5 | C9 | 0.63 | 0.59 | 6.3 | 0 | 74 | 18 | | | 7 | 31 |
| CE 6 | C10 | 0.87 | 0.75 | 13.8 | 13 | 77 | 23 | | | 6 | 29 |

* 1: Unit $10^{-7} \cdot cm^3 \cdot s \cdot g^{-1}$

Table 4

| | Water-absorbent Agent Composition or Water-absorbent Agent | Particle Size Distribution (mass.%) | | | | | | | |
|---|---|---|---|---|---|---|---|---|---|
| | | 850 μm or more | 710 μm or more but less than 850 μm | 600 μm or more but less than 710 μm | 500 μm or more but less than 600 μm | 300 μm or more but less than 500 μm | 150 μm or more but less than 300 μm | 45 μm or more but less than 150 μm | Less than 45 pm |
| E 5 | C11 | 0.0 | 1.0 | 7.3 | 22.1 | 52.1 | 16.1 | 1.4 | 0.0 |
| E 6 | C12 | 0.0 | 1.4 | 8.7 | 20.5 | 51.3 | 16.9 | 1.2 | 0.0 |
| E 7 | C13 | 0.0 | 0.4 | 5.8 | 22.2 | 55.9 | 15.3 | 0.4 | 0.0 |
| E 8 | C14 | 0.0 | 1.2 | 8.0 | 21.3 | 51.7 | 16.5 | 1.3 | 0.0 |
| E 9 | C15 | 0.0 | 0.9 | 7.3 | 21.4 | 53.6 | 16.1 | 0.8 | 0.0 |
| E 10 | C16 | 0.0 | 0.0 | 4.0 | 13.2 | 62.3 | 20.6 | 0.0 | 0.0 |
| E 11 | C17 | 0.0 | 0.0 | 2.9 | 10.1 | 61.9 | 24.7 | 0.4 | 0.0 |
| E12 | C18 | 0.0 | 0.0 | 0.0 | 5.0 | 53.6 | 39.1 | 2.3 | 0.0 |
| E 13 | C19 | 0.0 | 0.0 | 0.0 | 3.0 | 53.2 | 41.7 | 2.1 | 0.0 |
| E 14 | C20 | 0.0 | 0.0 | 0.0 | 4.0 | 52.4 | 41.5 | 2.1 | 0.0 |
| E 15 | C21 | 0.0 | 0.0 | 0.0 | 3.0 | 53.2 | 41.7 | 2.1 | 0.0 |
| E 16 | C22 | 0.0 | 0.0 | 0.0 | 8.0 | 50.2 | 39.2 | 2.5 | 0.1 |
| E 17 | C23 | 0.0 | 3.5 | 25.5 | 20.4 | 35.6 | 13.0 | 2.0 | 0.0 |
| E 18 | C24 | 0.0 | 3.0 | 23.2 | 18.2 | 37.4 | 15.6 | 2.5 | 0.1 |
| CE 7 | C25 | 0.0 | 0.0 | 0.0 | 3.0 | 54.5 | 39.7 | 2.6 | 0.2 |
| CE 8 | C26 | 0.0 | 3.2 | 25.5 | 20.4 | 35.6 | 13.2 | 2.1 | 0.0 |
| CE 9 | C27 | 0.0 | 3.0 | 23.1 | 18.2 | 37.4 | 15.6 | 2.6 | 0.1 |

Table 5

| | Water-absorbent Agent Composition or Water-absorbent Agent | D50 (μm) | $\sigma\zeta$ | Percentage of particles less than 150 μm in diameter (%) |
|---|---|---|---|---|
| Example 5 | C11 | 417 | 0.32 | 1.4 |
| Example 6 | C12 | 417 | 0.34 | 1.2 |
| Example 7 | C13 | 416 | 0.3 | 0.4 |
| Example 8 | C14 | 417 | 0.33 | 1.3 |
| Example 9 | C15 | 416 | 0.32 | 0.8 |
| Example 10 | C16 | 380 | 0.26 | 0.0 |
| Example 11 | C 17 | 363 | 0.3 | 0.4 |
| Example 12 | C18 | 318 | 0.32 | 2.3 |
| Example 13 | C 19 | 312 | 0.3 | 2.1 |
| Example 14 | C20 | 313 | 0.31 | 2.1 |
| Example 15 | C21 | 312 | 0.3 | 2.1 |
| Example 16 | C22 | 320 | 0.35 | 2.6 |

(continued)

| | Water-absorbent Agent Composition or Water-absorbent Agent | D50 ($\mu$m) | $\sigma\zeta$ | Percentage of particles less than 150 $\mu$m in diameter (%) |
|---|---|---|---|---|
| Example 17 | C23 | 496 | 0.37 | 2.0 |
| Example 18 | C24 | 467 | 0.4 | 2.6 |
| Comparative Example 7 | C25 | 314 | 0.31 | 2.8 |
| Comparative Example 8 | C26 | 495 | 0.37 | 2.1 |
| Comparative Example 9 | C27 | 466 | 0.4 | 2.7 |

Table6

|  | Water-absorbent Agent Composition | LDV (mm/s) Before Test | LDV (mm/s) After Test | LDV Decreasing Rate (%) | SFC (*1) | CSI | AAP (g/g) | gap radius index | $\sigma\zeta$ of gap radius index | MC (%) | CRC (g/g) |
|---|---|---|---|---|---|---|---|---|---|---|---|
| E 5 | C11 | 2.57 | 2.51 | 2.3 | 106 | 89 | 24 |  |  | 3.8 | 28 |
| E 6 | C12 | 2.60 | 2.18 | 16.1 | 98 | 87 | 24 |  |  | 3.9 | 28 |
| E 7 | C13 | 2.63 | 2.27 | 13.6 | 107 | 90 | 23 |  |  | 3.6 | 27 |
| E 8 | C14 | 2.96 | 2.91 | 1.7 | 111 | 87 | 23 |  |  | 4.9 | 27 |
| E 9 | C15 | 2.67 | 2.57 | 3.7 | 109 | 87 | 23 |  |  | 7.5 | 27 |
| E10 | C16 | 1.32 | 1.19 | 9.8 | 105 | 100 | 24 |  |  | 4 | 27 |
| E11 | C17 | 1.19 | 1.14 | 4.2 | 104 | 99 | 24 |  |  | 2.7 | 26 |
| E12 | C18 | 2.28 | 2.21 | 3.1 | 74 |  | 23 | 256 | 1.1 | 3.2 | 28 |
| E13 | C19 | 2.46 | 2.42 | 1.6 | 106 |  | 23 | 164 | 1.2 | 2.8 | 28 |
| E14 | C20 | 2.26 | 2.16 | 4.4 | 74 |  | 23 | 167 | 1.2 | 3.8 | 27 |
| E15 | C21 | 2.19 | 2.01 | 8.2 | 64 |  | 24 | 181 | 1.3 | 3.6 | 27 |
| E16 | C22 | 2.10 | 2.00 | 4.8 | 67 |  | 23 | 160 | 1.2 | 3.8 | 27 |
| E17 | C23 | 2.70 |  |  | 35 |  | 24 | 249 | 1.09 | 3.4 | 29 |
| E18 | C24 | 2.78 |  |  | 49 |  | 23 | 256 | 0.97 | 3.4 | 29 |
| CE 7 | C25 | 2.24 |  |  | 88 |  | 21 | 312 | 0.80 | 2.3 | 28 |
| CE 8 | C26 | 2.54 |  |  | 37 |  | 21 | 333 | 0.78 | 2 | 29 |
| CE 9 | C27 | 2.60 |  |  | 49 |  | 21 | 391 | 0.74 | 2.2 | 29 |

*"Gap radius index" refers to average gap radius index under no pressure

* MC refers to "Moisture Content".

*1: Unit $10^{-7}\cdot\text{cm}^3\cdot\text{s}\cdot\text{g}^{-1}$

As shown in Tables 2, 3, 5 and 6, unlike Comparative Examples 1 to 6, each of the water-absorbent agent compositions of Examples 1 to 11 is such that (a) the LDV decreasing rate is 30% or less (b) the SFC is 60 (Unit: $10^{-7}\mathrm{cm}^3{\cdot}\mathrm{s/g}$) or more, (c) the D50 is 200 $\mu$m to 420 $\mu$m, (d) the $\sigma\zeta$ is 0.25 to 0.40, and (e) the percentage of particles less than 150 $\mu$m in diameter is 3 mass % or less with respect to the whole particle amount.

As shown in Tables 4 and 6, unlike Comparative Examples 7 to 9, each of the water-absorbent agent compositions of Examples 12 to 18 is such that (a') content of particles 300 to 600 $\mu$m in diameter is not less than 30 mass %, (b') average gap radius index under no pressure is less than 310 $\mu$m, (c') a liquid distribution velocity (LDV: measured before the LDV resistance test) is not less than 2.0mm/s, and (d') saline flow conductivity (SFC) is not less than 30 (Unit: $10^{-7}\mathrm{cm}^3{\times}\mathrm{s}{\times}\mathrm{g}^{-1}$).

On this account, it is possible to provide the water-absorbent agent composition (i) which has both the liquid permeability and the liquid updrawing property that are conventionally incompatible with each other and (ii) whose liquid updrawing property hardly deteriorates.

The present invention is not limited to the description of the embodiments above, but may be altered by a skilled person within the scope of the claims. An embodiment based on a proper combination of technical means disclosed in different embodiments is encompassed in the technical scope of the present invention.

The embodiments and concrete examples of implementation discussed in the foregoing detailed explanation serve solely to illustrate the technical details of the present invention, which should not be narrowly interpreter within the limits of such embodiments and concrete examples, but rather may be applied in many variations within the spirit of the present invention, provided such variations do not exceed the scope of the patent claims set forth below.

INDUSTRIAL APPLICABILITY

As above, the water-absorbent agent composition obtainable by the method of the present invention has both the liquid permeability and the liquid updrawing property that are conventionally incompatible with each other, and the liquid updrawing property of the water-absorbent agent composition hardly deteriorates. On this account, it can be used suitably as an absorber of a disposal diaper, etc.

**Claims**

1. A method for producing a water-absorbent agent composition, comprising the step of:

   (a) carrying out crosslinking polymerization on an unsaturated monomer solution constituted of a monomer containing as a main component an acrylic acid and/or its salt in the presence of an internal crosslinking agent so as to produce a crosslinked polymer, the method further comprising the steps of:
   (b) drying the crosslinked polymer, adjusting the particle size of the crosslinked polymer, and carrying out another crosslinking with respect to a vicinity of the surface of each particle of the crosslinked polymer so as to obtain a water-absorbent agent which satisfy the following set of conditions (I) through (iv):

      (i) mass average particle diameter (D50) is 200 to 500 $\mu$m;
      (ii) percentage of particles less than 150 $\mu$m in diameter is not more than 5 mass % with respect to the whole particle amount;
      (iii) logarithm standard deviation ($\sigma\zeta$) of particle size distribution is 0.25 to 0.45;
      (iv) saline flow conductivity (SFC) is not less than 30 (Unit: $10^{-7}\mathrm{cm}^3{\times}\mathrm{S}{\times}\mathrm{g}^{-1}$); and

   (c) mixing the water-absorbent agent with water-insoluble organic or inorganic fine particles 1 to 100nm in average particle diameter,
   wherein:
   the water-absorbent agent Is mixed with the water-insoluble organic or inorganic fine particles in the form of a slurry 0.1 to 50 mass % In solid content.

**Patentansprüche**

1. Verfahren zum Herstellen einer Wasserabsorptionsmittelzusammensetzung, umfassend den Schritt:

   (a) Ausführen einer Vernetzungspolymerisation mit einer Lösung eines ungesättigten Monomers, die aus einem Monomer aufgebaut ist, das als einen Hauptbestandteil eine Acrylsäure und/oder deren Salz enthält, in der Gegenwart eines internen Vernetzungsmittels, um ein vernetztes Polymer herzustellen,

wobei das Verfahren ferner die Schritte umfasst:

(b) Trocknen des vernetzten Polymers, Einstellen der Teilchengröße des vernetzten Polymers, und Ausführen einer weiteren Vernetzung bezüglich einer Umgebung der Oberfläche jedes Teilchens des vernetzen Polymers, um ein Wasserabsorptionsmittel zu erhalten, welche den folgenden Satz von Bedingungen (i) mit (iv) erfüllen:

(i) massegemittelter Teilchendurchmesser (D50) ist 200 bis 500 $\mu$m;
(ii) prozentualer Anteil von Teilchen eines Durchmessers von weniger als 150 $\mu$m ist nicht mehr als 5 Masse-% bezüglich der gesamten Teilchenmenge;
(iii) logarithmische Standardabweichung ($\sigma\zeta$) der Teilchengrößenverteilung ist 0,25 bis 0,45;
(iv) Salineflussleitfähigkeit (SFC) ist nicht weniger als 30 (Einheit: $10^{-7}$cm$^3 \times$s$\times$g$^{-1}$);
und

(c) Mischen des Wasserabsorptionsmittels mit wasserunlöslichen organischen oder anorganischen Feinteilchen eines durchschnittlichen Teilchendurchmessers von 1 bis 100 nm,

wobei:
das Wasserabsorptionsmittel mit den wasserunlöslichen organischen oder anorganischen Feinteilchen in der Form einer Aufschlämmung eines Feststoffgehalts von 0,1 bis 50 Masse-% gemischt wird.

## Revendications

1. Procédé de production d'une composition d'agent absorbant l'eau, comprenant l'étape de :

(a) mise en oeuvre d'une polymérisation de réticulation sur une solution de monomère insaturé constituée d'un monomère contenant à titre de composant principal un acide acrylique et/ou son sel en présence d'un agent de réticulation interne de façon à produire un polymère réticulé,

le procédé comprenant en outre les étapes de :

(b) séchage du polymère réticulé, ajustement de la taille de particule du polymère réticulé, et mise en oeuvre d'une autre réticulation concernant le voisinage de la surface de chaque particule du polymère réticulé de façon à obtenir un agent absorbant l'eau qui satisfait le jeu de conditions (i) à (iv) suivant :

(i) le diamètre de particule moyen en poids (D50) est de 200 à 500 $\mu$m ;
(ii) le pourcentage de particules d'un diamètre inférieur à 150 $\mu$m n'est pas supérieur à 5 % en poids par rapport à la quantité totale de particules ;
(iii) l'écart-type logarithmique ($\sigma\zeta$) de la distribution des tailles de particules est de 0,25 à 0,45 ;
(iv) la conductivité de flux salin (SFC) n'est pas inférieure à 30 (unité : $10^{-7}$cm$^3$xSxg$^{-1}$) ; et

(c) mélange de l'agent absorbant l'eau avec de fines particules organiques ou inorganiques insolubles dans l'eau d'un diamètre moyen de particule de 1 à 100 nm,

dans lequel :
l'agent absorbant l'eau est mélangé avec les fines particules organiques ou inorganiques insolubles dans l'eau sous la forme d'une suspension épaisse ayant une teneur en solides de 0,1 à 50 % en poids.

FIG. 1

FIG. 2

F I G. 3

F I G. 4

F I G. 5

FIG. 6 (a)

FIG. 6 (b)

F I G. 7

F I G. 8

F I G. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 262091995 A
- EP 0951913 A
- EP 0640330 A
- WO 0660562001 A
- WO 474541998 A
- US 6414214 B
- US 1286182002 B
- US 5051259 A
- EP 0349240 A
- EP 0579764 A
- EP 0629411 A
- EP 0532002 A
- US 6399668 B
- JP 2005157758 A
- US 4093776 A
- US 4367323 A
- US 4446261 A
- US 4683274 A
- US 5244735 A
- US 4625001 A
- US 4873299 A
- US 4286082 A
- US 4973632 A
- US 4985518 A
- US 5124416 A
- US 5250640 A
- US 5264495 A
- US 5145906 A
- US 5380808 A
- EP 0811636 A
- EP 0955086 A
- EP 0922717 A
- US 6228930 B
- US 4950692 A
- US 5478879 A
- EP 844270 A
- US 6071976 A
- US 6254990 B
- US 6559239 B
- US 5409771 A
- US 200272471 B
- EP 942014 A
- EP 1108745 A
- US 5853867 A
- JP 9509591 PCT
- JP 9509591 A
- JP 5200068 A
- EP 532002 A

**Non-patent literature cited in the description**

- TEXTILE SCIENCE AND TECHNOLOGY 13 AB-SORBENT TECHNOLOGY. ELSEVIER, 2002, 428